(19) Europäisches Patentamt / European Patent Office / Office européen des brevets

(11) **EP 1 698 102 B1**

(12) **FASCICULE DE BREVET EUROPEEN**

(45) Date de publication et mention
de la délivrance du brevet:
**23.09.2015 Bulletin 2015/39**

(21) Numéro de dépôt: **04805555.2**

(22) Date de dépôt: **25.11.2004**

(51) Int Cl.:
***H04L 12/18*** *(2006.01)*

(86) Numéro de dépôt international:
**PCT/FR2004/003026**

(87) Numéro de publication internationale:
**WO 2005/067201 (21.07.2005 Gazette 2005/29)**

(54) **PROCEDE ET SYSTEME DE DIFFUSION MULTICAST VERS UN TERMINAL NOMADE EN FONCTION DE SA LOCALISATION**

VERFAHREN UND SYSTEM ZUR MULTICAST-AUSSTRAHLUNG IN RICHTUNG EINES ROAMENDEN ENDGERÄTS GEMÄSS DESSEN STANDORT

METHOD AND SYSTEM FOR MULTICAST BROADCASTING TOWARDS A ROAMING TERMINAL ACCORDING TO THE LOCATION THEREOF

(84) Etats contractants désignés:
**AT BE BG CH CY CZ DE DK EE ES FI FR GB GR HU IE IS IT LI LU MC NL PL PT RO SE SI SK TR**

(30) Priorité: **12.12.2003 FR 0314639**

(43) Date de publication de la demande:
**06.09.2006 Bulletin 2006/36**

(73) Titulaire: **Orange**
**75015 Paris (FR)**

(72) Inventeurs:
• **CANTENOT, Noël**
**F-91120 Palaiseau (FR)**
• **BELOEIL, Luc**
**F-14440 Douvres-La-Delivrance (FR)**
• **AUVRAY, Sébastien**
**London Swi w 9RP (GB)**

(74) Mandataire: **Cabinet Plasseraud**
**52, rue de la Victoire**
**75440 Paris Cedex 09 (FR)**

(56) Documents cités:
**EP-A- 1 289 223     EP-A- 1 303 107**
**WO-A-00/51373     US-A1- 2003 012 180**

• **MEYER D: "Request for Comments 2365: Administratively Scoped IP Multicast" IETF STANDARDS, [Online] 1 juillet 1998 (1998-07-01), pages 1-9, XP002274123 INTERNET Extrait de l'Internet: URL:http://www.faqs.org/ rfcs/rfc2365.html> [extrait le 2004-03-17] cité dans la demande**

**Description**

L'invention concerne un procédé et un système de diffusion Multicast vers un terminal nomade en fonction de la localisation de la connexion en réseau IP de ce dernier, ainsi que le ou les produits logiciels correspondants.

A l'heure actuelle, les entreprises ou sociétés industrielles ou commerciales font appel, de manière quasi nécessaire, à l'échange de données et d'informations supportées par ces données, par l'intermédiaire du réseau IP.

De la manière la plus répandue, ces entreprises ou sociétés sont des entités multiétablissements, à un ou plusieurs établissements étant en général associé au moins un site informatique, site WEB, ces sites étant reliés entre eux via un réseau IP. Ces entreprises ou sociétés sont donc en outre des entités multisite, constitutives d'une même organisation d'origine.

D'une manière générale, le processus de diffusion d'information Multicast IP permet d'effectuer des diffusions d'information sur chacun des sites précités.

Il existe en fait trois types de diffusion Multicast définies dans la norme RFC 2365 (Administratively scoped IP Multicast) :

- des diffusions privées au site, encore désignées de diffusions locales au site, effectuées uniquement à destination des terminaux appartenant et gérés par le site d'origine, par l'intermédiaire d'un réseau de rattachement d'origine, ces diffusions locales n'étant jamais transmises d'un site à l'autre bien que ces derniers appartiennent à la même organisation d'origine ;

- des diffusions privées à l'organisation d'origine, typiquement à l'entreprise, encore désignées diffusions locales à l'organisation, effectuées uniquement à destination des terminaux appartenant à l'organisation d'origine, ces diffusions locales à l'organisation n'étant jamais transmises à une organisation externe à l'organisation d'origine ;

- des diffusions globales, ces diffusions pouvant être diffusées sur l'ensemble du réseau INTERNET et donc accessibles à partir de tout réseau IP local ou point d'accès connecté à ce dernier.

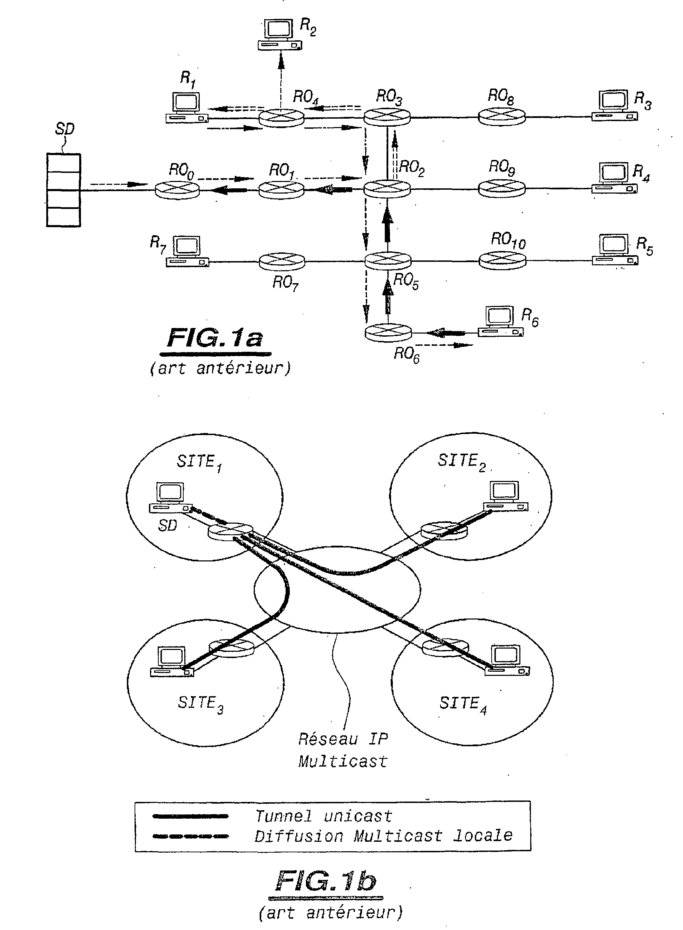

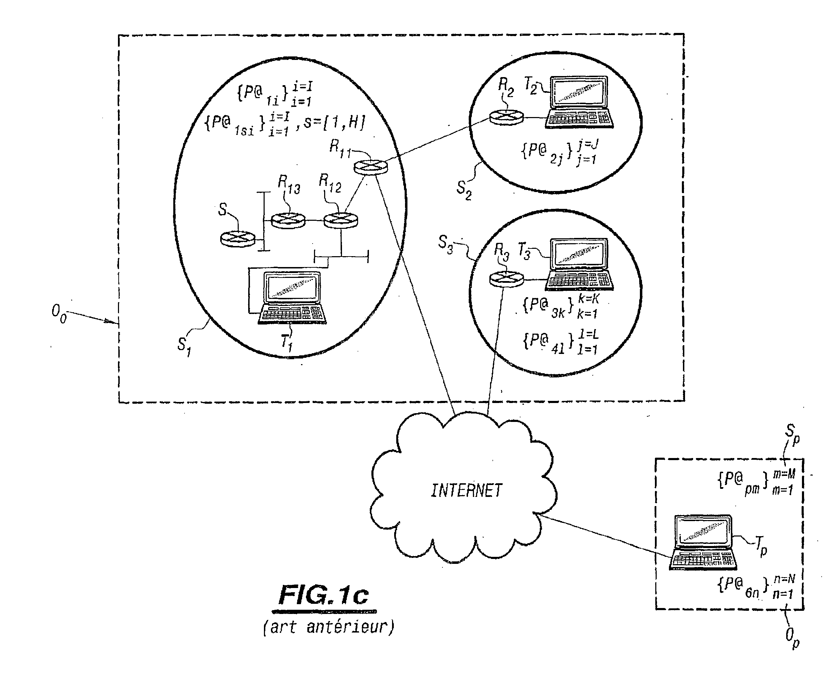

Un rappel de la technique de diffusion Multicast sera tout d'abord introduit en liaison avec les figures 1 a et 1 b.

Dans le cas de la technique de diffusion Multicast, en référence aux figures 1a et 1b, un récepteur, $R_6$, désirant avoir accès ou s'abonner à une diffusion Multicast envoie une requête d'accès vers son routeur d'accès $RO_6$, selon le procédé IGMP (RFC 2236). Le routeur d'accès $RO_6$ utilise un protocole de routage Multicast, le procédé PIM-SM (RFC 2117) par exemple, pour relayer cette demande jusqu'à un point du réseau (point de commutation ou routeur) qui reçoit déjà cette diffusion, le cas échéant directement jusqu'au routeur d'accès $RO_0$ de la source de la diffusion, ainsi que représenté figure 1 a. Le cheminement de la requête précitée est représenté en flèches en trait plein figure 1 a.

Chaque routeur appartenant au cheminement garde en mémoire l'interface logicielle, données-adresses de routage, par laquelle il a reçu une demande d'abonnement à une diffusion déterminée. Lorsque le routeur considéré reçoit les paquets de données IP relatifs à cette diffusion, il les transmet à son routeur voisin par cheminement inverse, grâce à l'interface logicielle mémorisée.

Ainsi les paquets de données IP correspondant à cette diffusion atteignent le récepteur demandeur $R_6$ par cheminement inverse. Le cheminement inverse est représenté par des flèches en trait pointillé en figure 1 a.

Lorsqu'un nouveau récepteur, le récepteur $R_1$ par exemple ainsi que représenté en figure 1a, veut accéder à cette même diffusion, il envoie sa requête d'accès à son routeur d'accès $RO_4$. Ce dernier transmet cette demande jusqu'à ce que celle-ci atteigne un routeur exécutant la diffusion demandée, en l'occurrence le routeur $RO_2$ sur la figure 1 a. Le cheminement de cette requête est représenté en flèches en trait mixte sur la figure 1a.

Le routeur le plus aval, dans le sens de la diffusion, atteint par cette requête, qui reçoit déjà les données et informations de la diffusion demandée par le récepteur $R_1$, stoppe la remontée de cette requête vers la source de diffusion, serveur SD, duplique les paquets de données IP pour transmettre ces derniers également vers le récepteur $R_1$ grâce à l'interface logicielle mémorisée, par cheminement inverse. Le cheminement de la diffusion complète est représenté en flèches en traits pointillés en figure 1a, le cheminement inverse $RO_2$ - $RO_3$ - $RO_4$- $R_1$ étant représenté en double flèche en trait pointillé sur la figure 1a, bien qu'appartenant à la même diffusion Multicast que celle demandée par le récepteur $R_6$. Il en va de même pour tout autre récepteur $R_2$ à $R_5$ susceptible de solliciter la même diffusion.

En conséquence, grâce à la technique de diffusion Multicast IP, on comprend que le serveur SD n'envoie qu'une seule fois les données support de l'information constitutives de la diffusion. Ces données sont dupliquées par les routeurs du réseau de façon dynamique, pour atteindre les récepteurs habilités qui en ont fait la demande. L'ensemble des chemins ou cheminements suivis par les paquets de données IP de la diffusion, du serveur SD vers ces récepteurs habilités, forme un arbre de diffusion d'information Multicast dont la racine est la source de diffusion, serveur SD ou routeur racine $RO_0$, les divers cheminements constituant les branches et les récepteurs de terminaison constituant les feuilles. On comprend, en particulier, que, suite à la demande d'accès des récepteurs $R_6$ et $R_1$, dans le cas d'une demande d'accès du récepteur $R_4$ la branche $RO_2$ - $RO_9$ et la feuille récepteur $R_4$ sont rajoutées alors que dans le cas d'une demande d'accès du récepteur $R_2$, seule la feuille récepteur $R_2$ est rajoutée.

En ce qui concerne l'adressage Multicast IP, la technique de diffusion Multicast introduit le concept de diffusion Multicast. Un paquet de données IP faisant partie d'une diffusion Multicast possède une adresse IP destination, dite adresse Multicast. Tous les paquets de données support d'information appartenant à la même diffusion portent la même adresse Multicast destination. Alors qu'une adresse IP Unicast permet d'identifier une et une seule machine ou poste de travail récepteur, une adresse IP Multicast sert à identifier un ensemble ou groupe de machines, l'ensemble de machines habilitées à l'accès à cette diffusion. Une adresse Multicast est donc toujours une adresse destination et n'a aucun sens en tant qu'adresse source. Dans ce but, une partie des codes d'adresse IP est réservée à l'attribution des adresses Multicast.

De manière spécifique, la norme RFC 2365 (Administratively Scoped IP Multicast) définit une façon d'attribuer à certaines adresses Multicast une limite administrative à la diffusion que ces adresses représentent.

En fonction de la valeur de l'adresse Multicast attribuée à une diffusion, cette diffusion est en conséquence destinée, ainsi que mentionnée précédemment, à être limitée :

- à un site ("site-local scope") ;

- à une organisation ("organization-local scope") ;

- à l'ensemble de l'Internet ("global scope").

Les possibilités offertes par le concept de diffusion Multicast précité en vue d'assurer la diffusion de données sur les différents sites d'une entreprise ou entité multisite apparaissent à l'heure actuelle sensiblement limitées.

Si, en référence à la figure 1b, on suppose une entité multisite implantée sur quatre sites distincts, site 1, site 2, site 3 et site 4, le site 1 comportant par exemple un serveur de diffusion Multicast SD, une telle diffusion, selon un mode "site-local scope", est locale au site 1. En conséquence, les paquets de données IP support de l'information de cette diffusion ne sont pas émis à l'extérieur du site. Ces paquets de données ne traversent donc pas le réseau d'interconnexion et ne peuvent pas être reçus par les utilisateurs des autres sites, site 2, site 3, site 4.

Les différents types de diffusion précités ont un impact très important sur les restrictions d'accès de tout terminal nomade appartenant à une organisation d'origine, en fonction de l'endroit du réseau, réseau IP local et/ou réseau INTERNET, auquel ce dernier se connecte.

La discrimination de la localisation de la connexion de tout terminal nomade appartenant à une organisation d'origine, telle qu'une entreprise multisite, est donc cruciale, en vue d'assurer la mise en oeuvre d'un processus de diffusion sélective spécifique à destination d'un terminal nomade, une telle diffusion devant, en particulier, être totalement sélective, du type diffusion point à point, lorsque ce terminal nomade est connecté en réseau hors de son organisation d'origine, ainsi que, le plus souvent, lorsque ce même terminal nomade, bien que connecté sur un site appartenant à son organisation d'origine n'est pas connecté sur son site d'origine. Ces situations sont représentées en figure 1c, pour un terminal nomade T connecté en réseau sur son site d'origine $S_1$, sur des sites $S_2$ et $S_3$ distincts du site d'origine $S_1$ mais appartenant à l'organisation d'origine $O_0$ et sur un site quelconque Sp appartenant à une organisation $O_p$ distincte de l'organisation d'origine $O_0$, le terminal étant noté $T_1$, $T_2$, $T_3$ et $T_p$ successivement.

Dans les situations précitées, ce terminal nomade ne peut être atteint que par les diffusions globales respectivement les diffusions globales et les diffusions locales au site d'origine.

En effet, certains services du réseau IP utilisent la notion de hiérarchie de l'architecture des réseaux IP. Ces services peuvent limiter leur portée réseau à un lien, un site, une organisation, voire étendre cette portée à l'ensemble de l'INTERNET.

Dans ces conditions, il est indispensable qu'un terminal en déplacement soit en mesure de déterminer s'il est connecté à son réseau de rattachement d'origine, sur un autre site appartenant à son organisation d'origine ou un autre site extérieur à cette dernière.

La localisation de cette connexion est en effet susceptible de modifier les possibilités reconnues à ce terminal en déplacement d'accès aux services du réseau IP dont l'accès est restreint par l'organisation d'origine de ce dernier, telle que son entreprise.

A l'heure actuelle les techniques de localisation de la connexion d'un terminal nomade en déplacement ne permettent pas à ce terminal d'être informé de sa localisation, en particulier de la localisation de sa connexion en réseau soit sur son site d'origine, soit sur un autre site distinct de son site d'origine appartenant à son organisation d'origine ou encore sur un site appartenant à une organisation distincte de son organisation d'origine ou directement sur le réseau INTERNET.

Parmi les solutions actuelles existantes en vue d'assurer la localisation de terminaux connectés au réseau IP, seules des solutions partielles ont été proposées.

Les solutions partielles précitées consistent essentiellement en des protocoles de découvertes de terminaux voisins et de gestion d'erreurs, tels que définis par l'IETF "The Internet Engineering Task Force", par les documents :

- RFC 2461 (Neighbour Discovery for IP Version 6) pour le protocole IP version 6, IPv6 ;
- RFC 1256 (ICMP Router Discovery Messages) pour le protocole IP version 4, IPv4 ;

  - par les protocoles d'allocation dynamique d'adresse IP :

- RFC 2131 (Dynamic Host Configuration Protocol) pour le protocole IPv4 ;
- RFC 3315 (Dynamic Host Configuration Protocol for IPv6, (DHCPv6)) ;

  - par les documents de spécifications des architectures de l'adressage IP utilisés par les protocoles précités :

- RFC 3513 (IPv6 Adressing Architecture) IPv6 ;
- RFC 2365 (Administratively Scoped IP Multicast, RFC 1918 (Address Allocation for Private Internets), RFC 3232 (Assigned Numbers : RFC 1700 is replaced by an Online Database) pour IPv4 ;

  - par un document présenté à l'IETF, lequel propose une solution permettant à un terminal du réseau IP de distinguer le préfixe IPv6 de son organisation :

- draft-zill-ipv6wg-zone-prefxlen-oo.txt (Organization Zone Prefix Length Discovery).

Les solutions de gestion de mobilités de terminaux au sein de réseaux IP sont définies par les documents de l'IETF (www.ietf.org) :

- RFC 3344 (IP Mobility support for IPv4) pour IPv4 ;
- draft-ietf-mobileip-ipv6-20.txt pour IPv6.

Les solutions de gestion de la mobilité de terminaux au sein de réseaux IP à l'aide d'une infrastructure AAA pour "Authentification, Authorization, Accounting" sont définies par les documents de l'IETF (www.ietf.org) :

- Protocol Diameter: draft-ietf-aaa-diameter-17.txt
- Application Mobile IPv4 : draft-ietf-aaa-diameter-mobileip-13.txt ;
- Application Mobile IPv6 : draft-le-aaa-diameter-mobileipv6-0.3.txt.

Les techniques antérieures mettant en oeuvre les solutions précitées pour permettre le déplacement d'un terminal nomade présentent de nombreux inconvénients, dûs à des problèmes fonctionnels non résolus.

Tous les terminaux fixes ou nomades connectés sur le même lien, appartenant au même réseau de rattachement d'origine, formant un réseau local par exemple, ont une adresse IP comportant le même préfixe, mais des suffixes différents.

Selon le protocole IPv4, une adresse IP est codée sur 32 bits. La longueur du préfixe permettant de décrire une adresse réseau est variable, de 1 à 30 bits. Une partie de l'espace d'adressage, ensemble des adresses, IPv4 est réservée pour les adresses "unicast", conformément au document IETF : RFC 3232. Le terme "unicast" désigne l'ensemble des adresses "Unicast" et "Global Unicast".

Selon le protocole IPv6, une adresse IP est codée sur 128 bits. La longueur du suffixe d'une adresse "unicast" est fixée à 64 bits, sauf pour des adresses IPv6 spécifiques qui commencent par le mot "000" dont l'usage est très règlementé. Une partie de l'espace d'adressage, ensemble des adresses, IPv6 est réservée pour les adresses "unicast", conformément au document ITEF : RFC 3513.

Lors de la connexion d'un terminal nomade en situation de déplacement à un réseau IP d'accueil distinct de son réseau de rattachement d'origine, les protocoles actuels permettent à un tel terminal d'acquérir une adresse IP lui permettant de s'intégrer au réseau IP d'accueil sont au nombre de trois.

Un premier protocole, désigné DHCP pour "Dynamic Host Configuration Protocol", peut être mis en oeuvre dans le cadre des protocoles IPv4 et IPv6 précités. Il permet à un terminal IP de demander à un serveur d'adresses de lui allouer une adresse IP provenant d'un pool, ou ensemble d'adresses, qui lui est propre pendant une durée négociée entre le terminal. nomade, client, et le serveur d'adresses. Lors d'une telle allocation, le terminal IP demandeur détecte également le préfixe du lien auquel il est connecté. La suite des protocoles IPv4 et IPv6 définit un protocole appelé DHCPv4 respectivement DHCPv6 basé sur un mécanisme d'allocation dynamique. Ce dernier apporte une bonne souplesse en matière de configuration et permet d'allouer à un terminal client une adresse IP et d'autres paramètres de configuration en réseau tels que adresse de DNS "Domain Name System" documents RFC 1034 et 1035 de l'IETF, de routeurs, serveurs, passerelles ou autres.

Un deuxième protocole fait partie intégrante des protocoles "Mobile IP". Dans le cadre des protocoles IPv4 et IPv6 précités, les versions correspondantes de ce deuxième protocole sont compatibles avec l'utilisation du protocole DHCP mais utilisent un mode différent et mieux adapté à la mobilité des terminaux nomades au sein de différents réseaux IP. Dans les deux versions précitées, ce deuxième protocole s'appuie sur le fait que les routeurs des réseaux IP transmettent périodiquement des messages d'annonce, notamment en version IPv6, décrivant le préfixe des réseaux IP, de rattachement d'origine ou d'accueil, auxquels les terminaux, fixes ou nomades, sont connectés.

Un terminal nomade en déplacement utilise alors ces messages d'annonce pour détecter le préfixe du réseau IP auquel il est connecté, et l'utilise pour auto-engendrer et s'attribuer une adresse "unicast" unique cohérente. En version IPv4 toutefois, les messages d'annonce périodiques précités peuvent annoncer directement l'adresse "unicast" complète qui peut être utilisée par le terminal nomade en déplacement. Cette adresse est une adresse attribuée à un routeur, gérée par ce dernier et peut être utilisée par un terminal nomade en déplacement lorsque les procédures décrites dans le protocole Mobile IP (pour IPv4) sont suivies.

Dans le cadre de ce deuxième protocole, un terminal, fixe ou nomade, possède une adresse IP fixe, configurée de manière spécifique dans le terminal. Cette adresse IP fixe fait partie du réseau de rattachement d'origine du terminal et constitue une adresse cohérente avec le préfixe du lien de rattachement d'origine du terminal, lien et donc réseau de rattachement d'origine auquel est connecté le terminal nomade, lorsque ce dernier n'est pas en situation de déplacement.

Dans le cadre des protocoles "Mobile IP", un terminal nomade en déplacement reste toujours en contact avec son réseau de rattachement d'origine. Dans ce but il est prévu, implanté au niveau de ce dernier, un agent logiciel appelé "Home Agent", HA. Dès que le terminal nomade en déplacement a acquis une nouvelle adresse IP distincte, et donc inconnue, de celles faisant partie de son réseau de rattachement d'origine, il s'enregistre alors auprès de son agent logiciel HA en lui communiquant l'adresse IP nouvellement acquise et qu'il utilisera désormais pour communiquer. Ainsi, l'agent logiciel HA a-t-il toujours connaissance de l'adresse IP qu'il faut utiliser pour entrer en contact avec le terminal nomade en déplacement.

Un troisième protocole est en outre mis en oeuvre essentiellement par les protocoles de contrôle d'accès aux réseaux IP.

Les protocoles de contrôle d'accès sont utilisés entre le terminal nomade en déplacement et le premier routeur IP du réseau IP d'accueil, encore désigné routeur d'accès.

Le protocole de contrôle d'accès utilisé entre le routeur d'accès et un serveur de contrôle d'accès est en général le protocole RADIUS ou un développement plus récent de ce dernier, le protocole DIAMETER.

Parmi les paramètres transportés par les protocoles DIAMETER et RADIUS, il existe un paramètre qui spécifie l'adresse IP à affecter au terminal nomade en déplacement demandeur d'accès. Cette adresse IP est ensuite transmise au terminal par le protocole de contrôle d'accès.

Dans ce type d'architecture, un serveur de contrôle d'accès appartenant au réseau de rattachement d'origine du terminal nomade et mettant en oeuvre le protocole DIAMETER, serveur encore désigné serveur AAAH, pour "Authentication, Authorization, Accounting Home" est configuré pour assurer l'authentification et l'autorisation d'accès du terminal nomade en déplacement.

Ainsi, le serveur AAAH est toujours averti lorsque l'un des terminaux qu'il gère essaie de se connecter au réseau IP et peut même, selon les cas, proposer l'adresse IP à lui affecter.

L'avantage du protocole DIAMETER est que ce protocole propose une architecture distribuée de serveurs de contrôle d'accès, ce qui permet de contrôler l'accès à des terminaux au travers de réseaux locaux gérés par des organisations distinctes. Lors de l'allocation de sa nouvelle adresse IP, le terminal nomade en déplacement détecte également le préfixe du lien auquel il est connecté.

Les inconvénients, dûs à des insuffisances, des trois protocoles actuels précités peuvent être résumés ci-après.

Le protocole DHCP, en dehors de l'adresse qu'il permet d'allouer à un terminal, est capable de fournir d'autres paramètres de configuration réseau à ce dernier. Les principaux paramètres sont le masque du réseau, le temps de validité accordé à la nouvelle adresse, l'adresse de passerelle réseau par défaut au travers de laquelle, adresse d'un fournisseur d'accès ou d'un ISP pour "International Standard Profile", le terminal accédera au réseau IP, ainsi que l'identifiant du client et le nom de serveur à utiliser.

Toutefois, il ne peut compenser les problèmes dus à l'adressage inhérents au protocole IPv4 et son découpage en sites et organisations.

En particulier, la structure des adresses et les dialogues terminal/routeur ne permettent aucunement aux terminaux :

- de déterminer lorsqu'une adresse est allouée au terminal IP en déplacement ;
- s'il est connecté à un autre lien appartenant à son site d'origine ;

- s'il est connecté à un lien d'un autre site appartenant à son organisation d'origine ;
- s'il est connecté à un lien n'appartenant pas à son organisation ;
- si les adresses se recouvrent, plusieurs sites d'une même entreprise ou plusieurs entreprises différentes pouvant utiliser les mêmes préfixes d'adresses réseau.

Avec le deuxième protocole partie intégrante des protocoles "Mobile IP", lorsqu'un terminal acquiert une nouvelle adresse IP, ce terminal ne peut que déterminer le préfixe du sous-réseau, tel qu'un réseau local, auquel appartient la nouvelle adresse IP acquise et le comparer au préfixe de son adresse fixe.

S'il peut permettre de détecter si le terminal nomade est connecté sur son lien d'origine, dans la négative, il ne permet aucunement de déterminer si le terminal nomade est connecté :

- à un autre lien appartenant à son site d'origine ;
- à un lien appartenant à un site de son organisation d'origine ;
- à un lien n'appartenant pas à son organisation.

En outre, le deuxième protocole précité, ne permet pas nécessairement au terminal nomade de détecter s'il est connecté sur son réseau de rattachement d'origine. C'est en particulier le cas lorsqu'il existe des plans d'adressage en recouvrement, c'est-à-dire lorsque plusieurs sites d'une même entreprise ou plusieurs entreprises différentes utilisent les mêmes préfixes réseaux.

Dans ces conditions, si le terminal nomade se connecte sur un réseau IP utilisant le même préfixe que son réseau de rattachement d'origine, en l'absence de discrimination possible, ce terminal nomade croira, à tort, être connecté sur ce dernier.

Enfin, lorsqu'un terminal nomade en déplacement transmet des paquets de données IP à l'extérieur du site où il est connecté, une translation de l'adresse source des paquets peut être effectuée, par exemple dans le cas de plans d'adressage en recouvrement ou si les sites de l'organisation sont reliés via l'INTERNET. Dans ces conditions, le terminal nomade en déplacement n'est donc plus accessible depuis l'extérieur par son adresse acquise dynamiquement, mais par son adresse translatée. On rappelle que pour un site quelconque sur lequel un terminal nomade est connecté, l'intérieur désigne en fait l'ensemble des réseaux et noeuds IP interconnectés et qui sont identifiables par l'ensemble des adresse IP privées et publiques de l'organisation à laquelle appartient le site quelconque précité. L'extérieur désigne tous réseaux et noeuds IP non identifiables à partir des adresses précitées.

Dans le cas du troisième protocole, l'utilisation d'un protocole de contrôle d'accès basé sur une architecture de type DIAMETER a pour conséquence que le terminal nomade en déplacement ne possède qu'un identifiant fixe appelé NAI pour "Network Access Identifier", lequel permet, entre autre, de déterminer le serveur AAAH à interroger pour requérir l'accès. De plus, le terminal nomade ne connaît pas l'adresse IP du serveur AAAH appartenant à son réseau de rattachement d'origine. Ainsi, lorsqu'une adresse est affectée au terminal nomade en déplacement, ce dernier ne peut en aucun cas déterminer s'il est connecté :

- à un autre lien appartenant à son site d'origine ;
- à un lien appartenant à un autre site de son organisation d'origine ;
- à un lien n'appartenant pas à son organisation d'origine.

Outre les manquements relatifs aux insuffisances inhérentes à la localisation des protocoles précités, la transmission d'une diffusion Multicast locale à un site vers un autre site, même si ce site et cet autre site appartiennent à une même organisation d'origine, n'est pas possible.

Ainsi, lorsqu'un terminal nomade en déplacement sollicite l'accès à une diffusion identifiée par l'adresse de groupe Multicast, il transmet simplement une requête d'accès à l'aide du protocole IGMP en spécifiant l'adresse dont il désire recevoir le flux.

Un tel mode opératoire ne permet donc, en aucun cas, de prendre en compte la localisation de la connexion du terminal nomade en vue d'effectuer la transmission de diffusions locales au site et/ou à l'organisation d'origine, dont l'accès est donc restreint par cette localisation.

Un exemple de techniques existantes de diffusion en multicast peut être trouvé dans le document WO 00/51373.

La présente invention a pour objet de remédier à l'ensemble des inconvénients des techniques et processus de l'art antérieur, afin de permettre d'assurer la transmission de tout type de diffusion locale au site et/ou à l'organisation d'origine auxquels un terminal nomade appartient en l'absence de toute limitation eu égard à la localisation de la connexion de ce dernier en réseau vis-à-vis de ce site et/ou de cette organisation d'origine.

Un objet de la présente invention est en particulier la mise en oeuvre d'un procédé de diffusion Multicast vers un terminal nomade permettant de combiner un processus de localisation de ce terminal nomade et un processus de diffusion Multicast étendu spécifiques, processus de diffusion Multicast étendue grâce auquel une diffusion locale à un site et/ou une organisation d'origine est rendue accessible par l'intermédiaire d'une diffusion Multicast globale.

En particulier, un objet de la combinaison précitée est la mise en oeuvre conjointe d'un processus sui generis de localisation de tout terminal nomade, permettant d'établir et de transmettre à ce dernier une information de discrimination de localisation, vis-à-vis du site et/ou de l'organisation d'origine auxquels ce terminal nomade appartient, et d'un processus sui generis de diffusion Multicast étendue, lequel, en fonction de cette information de discrimination de localisation, permet de substituer, à toute diffusion Multicast locale au site et/ou à l'organisation d'origine auxquels ce terminal nomade appartient, une diffusion Multicast globale permettant l'accès à celle-ci par ce terminal nomade, lorsque ce dernier est connecté en dehors de son site et/ou de son organisation d'origine, en l'absence d'accès à cette diffusion Multicast locale.

Le procédé de diffusion Multicast vers un terminal nomade en fonction de la connexion en réseau IP de ce dernier, objet de la présente invention, est remarquable en ce que, suite à une connexion courante de ce terminal nomade sur un site appartenant ou non au site et/ou à l'organisation d'origine auquel ce terminal nomade est rattaché et à la transmission d'un message de requête d'enregistrement de ce terminal nomade vers le site d'origine, ce procédé consiste au moins, à, au niveau de ce site d'origine, discriminer la localisation de ce terminal nomade vis-à-vis de son site d'origine respectivement de son organisation d'origine, à partir de ce message d'enregistrement et transmettre au terminal nomade une information de discrimination de localisation, et, au niveau de ce terminal nomade, pour toute demande d'accès à une diffusion Multicast de groupe destinée au site d'origine et relative à une diffusion Multicast locale au site respectivement à l'organisation d'origine de ce terminal nomade, substituer à cette demande d'accès, lorsque cette information de localisation désigne une connexion de ce terminal nomade à l'extérieur de son site d'origine respectivement de son organisation d'origine, une requête d'accès à une diffusion Multicast étendue permettant l'accès à ladite diffusion Multicast locale et transmettre, vers le site d'origine la requête d'accès à cette diffusion Multicast étendue.

Le système de diffusion Multicast vers un terminal nomade en fonction de la connexion en réseau IP de ce dernier, objet de la présente invention, est remarquable en ce que, suite à une connexion courante de ce terminal nomade sur un site appartenant ou non au site et/ou à l'organisation d'origine auquel ce terminal nomade est rattaché et à la transmission d'un message de signalisation de ce terminal nomade vers ce site d'origine, ce système comporte au moins, au niveau du site d'origine, un module de discrimination de la localisation de ce terminal nomade vis-à-vis de son site d'origine respectivement de son organisation d'origine à partir de ce message de signalisation et un module de transmission à ce terminal nomade d'une information de discrimination de localisation, et, au niveau de ce terminal nomade, pour toute demande de ce terminal nomade d'accès à une diffusion Multicast de groupe destinée au site d'origine et relative à une diffusion Multicast locale au site respectivement à l'organisation d'origine de ce terminal nomade, un module de substitution à cette demande d'accès, lorsque cette information de discrimination de localisation désigne une connexion de ce terminal nomade à l'extérieur de son site d'origine respectivement de son organisation d'origine, d'une requête d'accès à une diffusion Multicast étendue permettant l'accès à cette diffusion Multicast locale et un module de transmission vers le site d'origine de cette requête d'accès à cette diffusion Multicast étendue.

Le procédé et le système de diffusion Multicast objets de la présente invention trouvent application à tout type de réseau IP, en particulier réseau local, réseau étendu, réseau INTERNET...

Ils seront mieux compris à la lecture de la description et à l'observation des dessins ci-après dans lesquels, outre les figures 1a, 1b et 1c relatives à l'art antérieur,

- la figure 2a représente, à titre illustratif, un organigramme des étapes essentielles permettant la mise en oeuvre du procédé de diffusion Multicast objet de la présente invention ;
- la figure 2b représente, à titre illustratif, un détail de mise en oeuvre du procédé de difffusion Multicast objet de l'invention tel que représenté en figure 2a ;
- la figure 3a représente, à titre illustratif, un organigramme préférentiel non limitatif d'un processus sui generis de localisation d'un terminal nomade vis-à-vis de son site d'origine ou de son organisation d'origine, permettant la mise en oeuvre du procédé objet de la présente invention ;
- la figure 3b représente, à titre illustratif, un mode de mise en oeuvre spécifique du processus de comparaison utilisé par le processus de sui generis de localisation, selon la figure 3a ;
- la figure 4a représente, à titre illustratif, un organigramme préférentiel d'un processus sui generis de transmission Multicast étendue permettant la mise en oeuvre du procédé objet de la présente invention ;
- la figure 4b représente, à titre illustratif, un détail de mise en oeuvre d'un processus de transfert de diffusion Multicast locale à un site vers une diffusion globale ou une diffusion locale à l'organisation d'origine.
- la figure 5 représente, à titre illustratif, le schéma d'un système de diffusion Multicast vers un terminal nomade en fonction de sa localisation, conforme à l'objet de la présente invention.

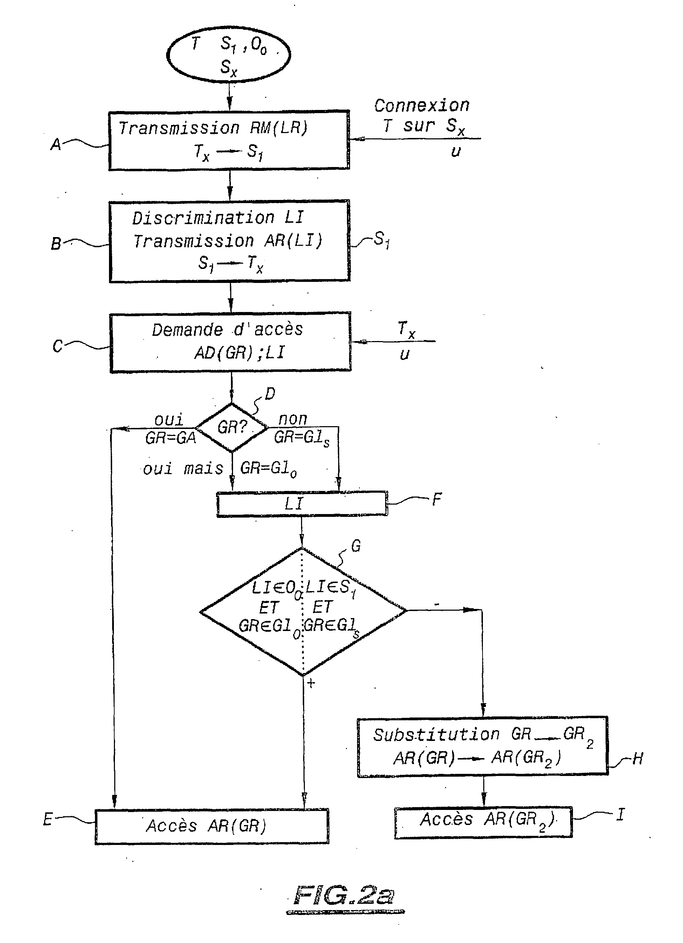

Une description plus détaillée du procédé de diffusion Multicast vers un terminal nomade, en fonction de la localisation de la connexion en réseau IP de ce dernier, conforme à l'objet de l'invention sera maintenant donnée en liaison avec la figure 2a.

En référence à la figure précitée, on considère un terminal nomade T appartenant à un site d'origine $S_1$ et bien entendu à une organisation d'origine $O_0$, ce terminal nomade étant amené en fonction du déplacement de l'utilisateur U de ce dernier à se rendre sur un site quelconque $S_x$ et à se connecter sur le site quelconque $S_x$ précité.

On indique d'une manière générale que le site quelconque $S_x$ appartient ou non au site et/ou à l'organisation d'origine auquel le terminal nomade T est rattaché.

En référence à la figure 2a, l'étape de connexion A du terminal nomade sur le site $S_x$ est représentée due à l'initiative de l'utilisateur U, le terminal T prenant alors la référence $T_x$ du seul fait de la connexion de ce terminal sur le site quelconque $S_x$ précité.

Du seul fait de cette connexion, et de manière classique, le terminal nomade $T_x$ ainsi connecté est en mesure de transmettre, si nécessaire, un message de requête de signalisation de ce terminal nomade vers le site d'origine $S_1$, ce message de signalisation étant noté RM(LR). Un tel message n'est pas nécessaire lorsque le terminal nomade est connecté à son lien ou sous-réseau d'origine.

A titre d'exemple non limitatif, on indique que dans le message de signalisation précité, le paramètre LR désigne une référence de localisation formée par exemple par une adresse IP allouée par le site d'accueil du terminal nomade $T_x$, c'est-à-dire le site quelconque $S_x$, en particulier par l'administrateur du site quelconque $S_x$ précité.

Suite à la transmission du message de signalisation RM(LR) le procédé objet de l'invention consiste, au niveau du site d'origine $S_1$, et suite à la réception de ce message de signalisation, en une étape B, à discriminer la localisation du terminal nomade $T_x$, vis-à-vis de son site d'origine $S_1$, respectivement de son organisation d'origine $O_0$, à partir du message de signalisation précité, la discrimination s'entendant de l'établissement d'une information de discrimination de localisation LI, ainsi qu'il sera décrit ultérieurement dans la description.

L'étape consistant à discriminer est alors suivie d'une étape consistant à transmettre au terminal nomade $T_x$ l'information de discrimination de localisation LI précitée, afin que ce dernier puisse utiliser l'information de localisation discriminée.

L'étape B précitée est alors suivie, au niveau du terminal nomade Tx, pour toute demande du terminal nomade d'accès à une diffusion Multicast de groupe destinée au site d'origine $S_1$ et relative à une diffusion Multicast locale au site respectivement à l'organisation d'origine du terminal nomade, la demande d'accès étant notée AD(GR), GR désignant en fait l'adresse de diffusion Multicast de groupe dans le site d'origine, à substituer en des étapes D, F, G, H telles que représentées en figure 2a à la demande d'accès AD(GR), une requête d'accès à une diffusion Multicast étendue, lorsque, d'une part, la demande d'accès AD(GR) est relative à une diffusion Multicast locale au site $S_1$ respectivement à l'organisation d'origine $O_0$ du terminal nomade et que, d'autre part, l'information de discrimination de localisation LI désigne une connexion du terminal nomade à l'extérieur de son site $S_1$ respectivement de son organisation d'origine $O_0$.

On comprend en particulier que grâce à la substitution précitée, toute demande d'accès relative à une diffusion Multicast locale au site respectivement à l'organisation d'origine du terminal nomade n'est pas accessible à partir d'un site quelconque $S_x$ de connexion du terminal nomade à l'extérieur de son site respectivement à l'extérieur de son organisation d'origine, mais que, par contre, la requête d'accès à une diffusion Multicast étendue permet l'accès à la diffusion Multicast locale au site respectivement à l'organisation d'origine du terminal nomade considéré.

L'étape de substitution précitée est alors suivie d'une étape F consistant à transmettre vers le site d'origine la requête d'accès à la diffusion Multicast étendue ainsi qu'il sera décrit ultérieurement dans la description.

En particulier, on indique que la requête d'accès à la diffusion Multicast étendue est notée AR(GR$_2$), l'opération de substitution précitée consistant, ainsi qu'il sera décrit de manière plus détaillée ultérieurement dans la description, à substituer à l'adresse GR de demande d'accès à une diffusion Multicast de groupe une adresse GR$_2$ de diffusion Multicast étendue permettant d'assurer une diffusion de données semblables.

Dans un premier mode de mise en oeuvre du procédé objet de la présente invention, on indique que l'opération de substitution précitée peut être gérée ainsi que représentée en figure 2a.

Suite à l'étape C de demande d'accès élaborée par le terminal nomade Tx à la seule initiative de l'utilisateur U, l'opération de substitution peut consister à effectuer un test D de discrimination de l'adresse GR de la demande d'accès à une diffusion Multicast de groupe, le test de l'étape D consistant à discriminer si l'adresse GR précitée est une adresse globale GA, une adresse de groupe locale à l'organisation $GI_0$ ou encore une adresse de groupe locale au site $GI_s$.

Pour la mise en oeuvre du test de l'étape D, on indique que la valeur de l'adresse G de demande d'accès à une diffusion Multicast de groupe est simplement discriminée en valeur par rapport à une loi d'établissement de valeur des adresses d'accès globales GA, des adresses de groupe locales à l'organisation $GI_0$, respectivement des adresses de groupe locales au site $GI_s$.

On indique, à titre d'exemple non limitatif, que les adresses globales GA, locales à l'organisation $GI_0$ respectivement au site $GI_s$ peuvent, à titre d'exemple non limitatif, correspondre à des valeurs d'adresses attribuées par l'administrateur du site d'origine $S_1$ dans des plages de valeurs disjointes afin d'effectuer une simple discrimination par comparaison.

Sur réponse positive d'appartenance de l'adresse GR de la demande d'accès à l'ensemble des adresses globales GA, cette réponse positive étant notée "oui" sur la figure 2a, la demande d'accès à une diffusion Multicast de groupe est alors transmise en une étape E directement sous forme d'une requête d'accès notée AR(GR), la demande de diffusion Multicast de groupe étant accessible par le terminal nomade Tx indépendamment de la localisation de son site de connexion en raison du caractère global de la diffusion Multicast.

Lorsque l'adresse GR de la demande de diffusion Multicast de groupe n'est pas une adresse globale, elle correspond soit à une adresse de diffusion Multicast de groupe locale à l'organisation $GI_0$ ou locale au site $GI_s$.

Cette situation est représentée de manière symbolique au test D de la figure 2a par la réponse "oui mais" lorsque l'adresse GR est une adresse globale à l'organisation $GI_0$ et par la réponse "non" lorsque l'adresse GR est au contraire une adresse globale au site $GI_s$. Dans les deux situations précitées représentées par les situations "oui mais" et "non" à la réponse au test D, la connaissance de la localisation de la connexion ou plus exactement du site du terminal nomade $T_x$ sur le site quelconque $S_x$ est alors nécessaire.

En conséquence, les réponses "oui mais" et "non" au test D sont alors suivies d'un appel à l'étape F de l'information de localisation LI laquelle a été transmise au terminal nomade à l'étape B par le site d'origine $S_1$.

L'étape F est alors suivie d'une étape G ayant pour objet de discriminer l'appartenance de l'adresse GR de demande de diffusion Multicast de groupe vis-à-vis de l'ensemble des adresses globales locales à l'organisation d'origine lorsque le terminal nomade est connecté sur un site distinct du site d'origine mais appartenant à l'organisation d'origine $O_0$ respectivement de l'adresse GR de demande de diffusion de groupe appartenant à l'ensemble des adresses de groupe locales au site d'origine et de la connexion du terminal nomade $T_x$ sur ce dernier.

En conséquence, le test de l'étape G permet d'établir les relations logiques suivantes :

$$LI \in O_0 \quad ET \ GR \in Gl_0 \ ;$$

$$LI \in S_1 \quad ET \ GR \in Gl_s \cdot$$

Sur réponse positive à l'une ou l'autre des relations logiques précitées, la demande d'accès à une diffusion Multicast de groupe AD(GR) est alors établie sous forme d'une requête d'accès à cette même adresse G sous la forme de requête AR(GR) à l'étape E de la figure 2a.

Au contraire, sur réponse négative à l'une et l'autre des relations logiques du test de l'étape G, une étape H est appelée afin de permettre la substitution à l'adresse GR de demande d'accès à une diffusion Multicast de groupe, qui ne peut être reçue sur le site quelconque $S_x$ de connexion du terminal $T_x$, d'une adresse $GR_2$ permettant au contraire de recevoir sur le site $S_x$ précité la diffusion Multicast de groupe précédemment mentionnée.

L'étape H est alors suivie d'une étape I consistant à transmettre la requête d'accès $AR(GR_2)$ dans laquelle l'adresse de diffusion Multicast de groupe a été remplacée par une adresse $GR_2$ dite de diffusion Multicast étendue permettant bien entendu l'accès à la diffusion Multicast locale inaccessible à partir du terminal nomade connecté sur le site quelconque $S_x$.

Le mode opératoire de la substitution réalisé à l'étape H sera décrit ultérieurement dans la description.

D'une manière générale, on observera sur la figure 2a que la référence de localisation LR, d'une part, et l'adresse GR de demande de diffusion Multicast de groupe, d'autre part, sont bien entendu des variables indépendantes laissées sensiblement à la seule appréciation de l'utilisateur U.

Pour cette raison, il est bien entendu envisageable d'intervertir, le cas échéant, la succession des étapes D, F et G sans sortir du cadre de l'objet de la présente invention, la discrimination de l'appartenance de la référence de localisation LI à l'organisation respectivement au site d'origine pouvant être effectuée préalablement à la discrimination de la valeur de l'adresse de demande de diffusion Multicast de groupe GR par exemple.

Une telle interversion ne sera pas décrite car elle est du domaine des compétences de l'homme du métier.

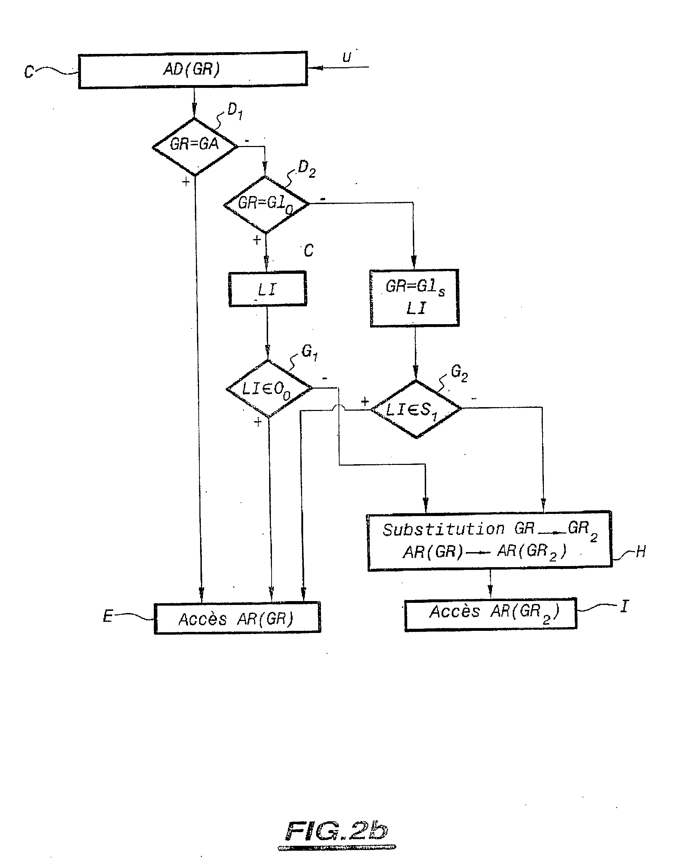

En ce qui concerne la mise en oeuvre des étapes logiques représentées à l'étape D et G de la figure 2a, celles-ci peuvent être mises en oeuvre ainsi que représenté en figure 2b, l'étape D pouvant être subdivisée en fait en deux tests successifs $D_1$ et $D_2$ dans lesquels l'adresse de diffusion Multicast de groupe GR est successivement comparée à l'ensemble des adresses globales de groupe GA à la sous-étape $D_1$, la réponse négative à la sous-étape précitée permettant d'appeler la sous-étape $D_2$ de test d'appartenance de l'adresse de groupe GR à l'ensemble des adresses de groupe locales à l'organisation $GI_0$. Sur réponse positive à la sous-étape $D_2$ on se retrouve dans la situation de la réponse "oui mais" de l'étape D de la figure 2a et sur réponse négative à la sous-étape $D_2$, on se retrouve dans la situation de la réponse négative "non" au test de l'étape D de la figure 2a.

L'étape G de la figure 2a peut également être subdivisée en deux sous-étapes $G_1$ respectivement $G_2$ d'appartenance de la référence de localisation LI à l'organisation d'origine $O_0$ respectivement au site d'origine $S_1$.

Les étapes E, F, H et I sont alors appelées de la même manière que dans le cas de la figure 2a.

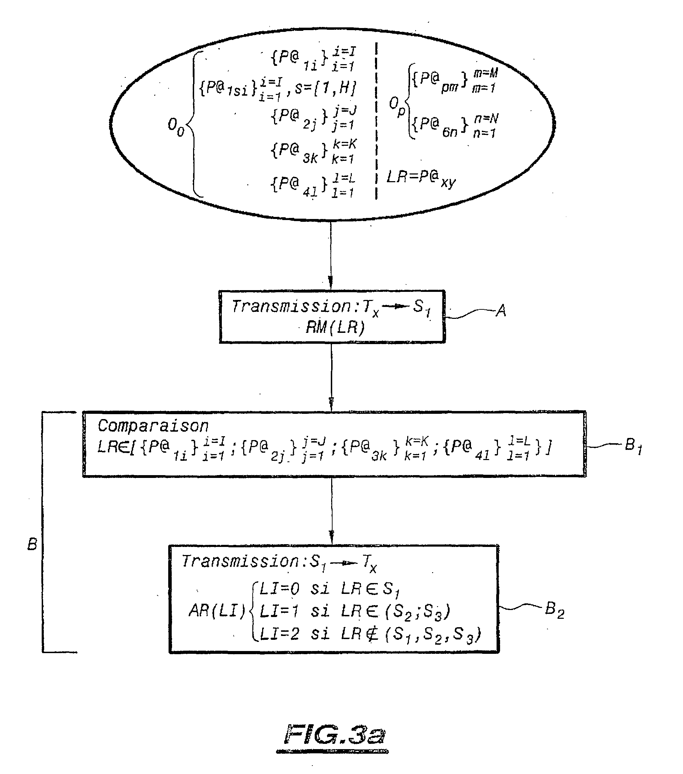

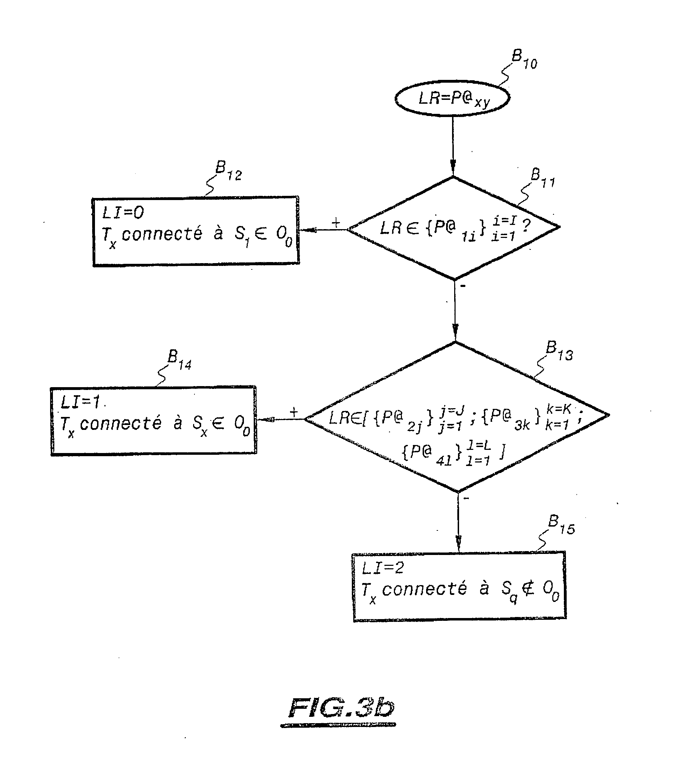

Une description plus détaillée d'un processus sui generis de discrimination du site de connexion vis-à-vis du site et/ou de l'organisation multisite d'origine d'un terminal nomade conforme à l'objet de la présente invention sera maintenant donnée en liaison avec la figure 1c, relative à l'art antérieur, et les figures 3a, 3b.

Sur la figure 1c, on a représenté une organisation multisite d'origine $O_0$ comportant par exemple trois sites $S_1$, $S_2$, $S_3$, le site $S_1$ constituant le site d'origine correspondant à un réseau local, par exemple de type IP, comportant une pluralité de routeurs $R_{11}$, $R_{12}$ et $R_{13}$ et un serveur S permettant d'assurer la gestion de l'organisation multisite d'origine $O_0$ précitée.

Le site $S_2$ est par exemple constitué par un sous-réseau local de type IP relié au réseau local constitutif du réseau de rattachement d'origine du site $S_1$.

Enfin, le site $S_3$ est un site appartenant à l'organisation multisite d'origine $O_0$, le site $S_3$ étant toutefois relié au réseau de rattachement d'origine et au site $S_1$ par l'intermédiaire du réseau INTERNET par exemple.

Un terminal nomade $T_1$ est ainsi susceptible d'opérer dans son réseau de rattachement d'origine, ce terminal connecté sur le site d'origine $S_1$ auquel il est rattaché étant référencé $T_1$ et connecté au routeur $R_{12}$ par exemple et/ou hors de son réseau de rattachement d'origine, ce terminal étant alors noté $T_2$ lorsqu'il est connecté au sous-réseau local constitutif du site $S_2$ par l'intermédiaire du routeur $R_2$.

Le terminal nomade précité peut également être connecté hors de son réseau de rattachement d'origine sur le site $S_3$ appartenant à l'organisation multisite d'origine $O_0$ mais par l'intermédiaire du réseau INTERNET, le terminal nomade précité étant noté $T_3$ dans cette situation et connecté au routeur $R_3$.

Enfin, le terminal nomade précité peut être connecté sur un site quelconque noté $S_p$ n'appartenant pas à l'organisation multisite d'origine $O_0$ mais au contraire à une organisation multisite quelconque, notée Op, le terminal nomade précité portant la référence $T_p$ dans cette situation.

On comprend bien entendu, à titre d'exemple non limitatif, que le terminal nomade précité portant les références $T_1$, $T_2$, $T_3$ et $T_p$ peut être constitué par le même terminal en déplacement ou bien par tout terminal nomade distinct susceptible de mettre en oeuvre le procédé objet de la présente invention.

Ainsi que représenté sur la figure 1c, au terminal nomade $T_1$ est allouée par le site de rattachement d'origine et finalement par le réseau de rattachement d'origine une adresse permanente interne notée $P@_{1i}$ pour toute connexion en réseau du terminal nomade $T_1$ sur un site appartenant à ce réseau de rattachement d'origine.

De même, une adresse temporaire interne est allouée au terminal nomade référencé $T_2$ ou $T_3$ pour toute connexion en réseau du terminal nomade précité sur un autre site appartenant à l'organisation multisite d'origine $O_0$. On comprend, en particulier, que l'administrateur du réseau IP constitutif de l'organisation multisite d'origine $O_0$ et en définitive l'administrateur des sites $S_1$, $S_2$ et $S_3$ est alors en mesure d'allouer, lorsque le terminal nomade en position $T_2$ est connecté sur le site $S_2$, une adresse temporaire interne notée $P@_{2j}$ ou au contraire, une adresse temporaire interne notée $P@_{3k}$ ou $P@_{4l}$ lorsque le terminal nomade en position $T_3$ est connecté sur le site S3. On indique en particulier que la distinction entre les adresses temporaires internes $P@_{3k}$ ou $P@_{4l}$ correspond à une adresse temporaire dite de mobilité sensiblement arbitraire allouée par le centre serveur S respectivement à une adresse de translation par exemple.

On rappelle, en particulier, que, dans le cas d'une entreprise, l'administrateur dispose d'un ensemble d'adresses IP, dites privées, lesquelles peuvent être utilisées librement ; tout administrateur d'un autre réseau IP peut également réutiliser librement ces mêmes adresses IP (document RFC 1918 de l'IETF). De plus, lorsque cette entreprise désire communiquer sur l'INTERNET, elle doit alors utiliser des adresses IP globalement uniques, uniques dans le monde et donc quelque soit le réseau connecté à l'INTERNET. Les adresses globalement uniques sont appelées publiques et attribuées soit par le fournisseur d'accès à l'INTERNET, soit par un organisme régional RIR pour "Régional Internet Registry". Le plus souvent les entreprises utilisent un équipement entre leur réseau et l'INTERNET qui translate les adresses privées en adresses publiques. Dans le procédé objet de l'invention, l'adresse IP attribuée au terminal nomade $T_x$ peut être privée et les datagrammes utilisés pour atteindre le serveur S peuvent néanmoins traverser un translateur d'adresse en passant par l'INTERNET et donc paraître venir d'une adresse publique. Une telle adresse publique peut, par exemple être possédée par le site $S_3$ de la figure 1 ou tout autre site.

Enfin, lorsque le terminal nomade est connecté sur un site quelconque, tel que le site $S_p$ n'appartenant pas à l'organisation multisite d'origine mais à une autre organisation multisite Op, alors l'adresse allouée au terminal en position $T_p$ sur la figure 1 est désignée $P@_{pm}$ et constitue une adresse temporaire externe. $P@_{pm}$ désigne une adresse privée et $P@_{6n}$ désigne une adresse publique utilisée en translation d'adresse de l'adresse privée $P@_{pm}$ précitée.

On comprend, dans ces conditions, que la notion d'adresse permanente et temporaire interne correspond au caractère interne des adresses allouées vis-à-vis de l'organisation multisite d'origine $O_0$, alors que le caractère externe de l'adresse temporaire, lorsque le terminal nomade est connecté à un site n'appartenant pas à l'organisation multisite d'origine, correspond au caractère externe de cette adresse vis-à-vis de l'organisation multisite d'origine précitée.

On comprend bien entendu que, a priori, seules les adresses internes sont connues de l'organisation multisite d'origine $O_0$, les adresses externes n'étant pas connues de cette dernière.

En conséquence et conformément à un aspect du procédé objet de la présente invention, il est considéré que les adresses précitées internes et/ou externes forment, pour le terminal nomade, une référence de localisation par rapport à l'organisation multisite d'origine $O_0$.

Ainsi, à titre d'exemple non limitatif, on note :

$$\left\{P@_{1si}\right\}_{i=1,\ s=1\ \grave{a}\ H,}^{i=I}$$

l'ensemble des adresses permanentes internes d'un des sous-réseaux allouées à l'ensemble des terminaux nomades rattachés au réseau de rattachement d'origine support du site d'origine $S_1$. Cet ensemble est l'ensemble des adresses permanentes internes du lien d'origine ou sous-réseau d'origine, l'ensemble $\{P@_{1i}\}$ fait donc référence à l'ensemble des adresses du site d'origine S1, tous les sous-réseaux étant confondus ;

$$-\ \left\{P@_{2j}\right\}_{j=1}^{j=J},\ \left\{P@_{3k}\right\}_{k=1}^{k=K},\ \left\{P@_{4l}\right\}_{l=1}^{l=L}$$

l'ensemble des adresses temporaires internes allouées à l'ensemble des terminaux nomades précités pour toute connexion de l'un de ces terminaux nomades sur un autre site appartenant à l'organisation multisite d'origine $O_0$ ;

$$-\ \left\{P@_{pm}\right\}_{m=1}^{m=M}$$

l'ensemble des adresses temporaires externes allouées par une organisation multisite Op distincte de l'organisation multisite d'origine et pour tout site Sp appartenant à cette organisation multisite distincte ;

$$-\ \left\{P@_{6n}\right\}_{n=1}^{n=N}$$

l'ensemble des adresses publiques utilisées par translation des adresses privées $P@_{pm}$.

En référence à la figure 3a, pour toute connexion du terminal nomade précitée en réseau sur un site déterminé, le processus sui generis de localisation objet de l'invention consiste en une étape A à transmettre du terminal nomade $T_1$, $T_2$, $T_3$ ou $T_p$ vers le réseau de rattachement d'origine et finalement vers le site S1 appartenant à l'organisation multisite d'origine $O_0$, un message d'enregistrement comportant au moins la référence de localisation précédemment citée.

Sur la figure 3a, le message d'enregistrement est noté :

RM (LR) où LR désigne la référence de localisation précitée. On rappelle que la référence de localisation est formée par l'une des adresses allouée au terminal nomade en déplacement précédemment mentionné selon les situations représentées à la figure 1 c.

Le message de signalisation peut permettre d'effectuer un enregistrement de la connexion du terminal nomade.

En particulier, de manière avantageuse non limitative, on indique que la référence de localisation LR peut consister en une valeur codée, fonction de l'adresse allouée. Dans cette hypothèse, cette valeur codée peut être obtenue au niveau de l'ordinateur nomade, à partir d'une fonction de codage spécifique XOR bit à bit ou autre de l'adresse permanente avec une clé de paramétrage, la fonction de codage réciproque et la clé de paramétrage permettant de restituer l'adresse permanente étant connues du seul serveur S du site d'origine $S_1$. La fonction de codage et la fonction de décodage réciproque identité permettent par exemple de transmettre uniquement l'adresse permanente d'origine. Dans ce but, le terminal nomade peut effectuer un test, pouvant comparer le résultat du codage de la référence de localisation LR, au moyen de la fonction de codage f, désigné f(LR), et le résultat de cette même fonction de codage appliquée sur l'adresse permanente d'origine $\{P@_{1si}\}$. Le terminal nomade ne connaissant que f($\{P@_{1si}\}$) procède au calcul de f(LR) pour pouvoir effectuer cette comparaison. Cette dernière permet au terminal nomade de détecter ou non s'il est ou non connecté à son lien d'origine sur son site d'origine $S_1$. Le serveur S doit procéder au décodage de la valeur résultat du codage RP@$_{1si}$ = f {P@$_{1si}$} pour retrouver le véritable ensemble $\left\{P@_{1si}\right\}_{i=1}^{i=I}$ , s fixé. Seul le serveur S connaît la fonction inverse f$^{-1}$, laquelle appliquée à la valeur codée de l'adresse permanente f$^{-1}$(f {P@$_{1si}$})={P@$_{1si}$} restitue cette dernière. Le serveur S peut ensuite comparer la valeur de référence de localisation LR avec $\left\{P@_{1si}\right\}_{i=1}^{i=I}$ , s = 1 à H, pour vérifier que le terminal est sur son site d'origine.

L'étape A est alors suivie d'une étape B$_1$ consistant à comparer pour identification la référence de localisation LR aux valeurs d'adresses de l'un au moins des ensembles précédemment cités formés par l'ensemble des adresses permanentes internes allouées à l'ensemble des terminaux nomades rattachés au réseau de rattachement d'origine et par l'ensemble des adresses temporaires internes allouées à cet ensemble de terminaux nomades pour toute connexion sur un autre site appartenant à l'organisation multisite d'origine O$_0$.

Sur la figure 3a, l'opération de comparaison est symbolisée par la relation :

$$LR \in \left[ \left\{P@_{1i}\right\}_{i=1}^{i=I} ; \left\{P@_{2j}\right\}_{k=1}^{k=K} ; \left\{P@_{3k}\right\}_{k=1}^{k=K} ; \left\{P@_{4l}\right\}_{l=1}^{l=L} \right]$$

L'étape B$_1$ de comparaison est alors suivie d'une étape B$_2$ consistant à transmettre du site de rattachement d'origine S$_1$ vers le terminal nomade, selon la position de ce dernier, un message de réponse ou d'acquittement de signalisation contenant au moins une information de discrimination de localisation du terminal nomade précité.

A l'étape B$_2$, le message d'acquittement d'enregistrement est noté : AR (LI).

Pour le message précité LI désigne l'information de discrimination de localisation transmise au terminal nomade.

Selon un aspect remarquable du procédé objet de l'invention, l'information de discrimination de localisation LI désigne :

- soit la connexion du terminal nomade sur son réseau de rattachement d'origine, c'est-à-dire sur son site S$_1$, sur identification de la référence de localisation LR dans l'ensemble des adresses permanentes internes ;
- soit la connexion du terminal nomade en réseau sur un autre site appartenant à l'organisation multisite d'origine sur identification de la référence de localisation LR dans l'ensemble des adresses temporaires internes précédemment citées ;
- ou encore la connexion du terminal nomade en réseau sur un site quelconque n'appartenant pas à l'organisation multisite d'origine, en l'absence d'identification de la référence de localisation LR dans l'un et l'autre ensemble des adresses permanentes internes, ensemble des adresses temporaires internes.

Sur la figure 3a, à l'étape B$_2$ précitée, le contenu de l'information de discrimination de localisation est représenté par les relations :

$$LI = 0 \text{ si } LR \in S_1 ;$$

$$LI = 1 \text{ si } LR \in (S_2; S_3) ;$$

$$LI = 2 \text{ si } LR \notin (S_1, S_2, S_3).$$

Dans la relation précédente, on indique que les relations d'appartenance aux sites S$_1$, S$_2$ et S$_3$ sont représentées de manière symbolique mais exécutées par la vérification d'appartenance de la référence de localisation à l'ensemble des adresses associées à chacun des sites précités ainsi que mentionné précédemment dans la description.

On comprend également que l'absence d'appartenance de la référence de localisation LR est également obtenue par la vérification d'absence d'identification de la référence de localisation LR dans tous les ensembles d'adresses associées à chacun des sites S1, S2, S3 appartenant à l'organisation multisite d'origine.

Bien entendu, dans la relation symbolique donnée pour l'étape B$_2$ de la figure 3a, les valeurs 0, 1 et 2 de l'information de localisation LI sont totalement arbitraires.

Enfin, à l'étape B$_2$ de la figure 3a, T$_x$ désigne en fait le terminal nomade dans la position T$_1$, T$_2$, T$_3$ ou T$_p$.

D'une manière plus spécifique, on indique que l'ensemble des adresses permanentes internes $\left\{P@_{1i}\right\}_{i=1}^{i=I}$ et l'ensemble des adresses temporaires internes $\left\{P@_{2j}\right\}_{j=1}^{j=J}$, $\left\{P@_{3k}\right\}_{k=1}^{k=K}$ et $\left\{P@_{4l}\right\}_{l=1}^{l=L}$ sont formés avantageusement par des ensembles disjoints de valeurs d'adresses allouées par le réseau de rattachement d'origine au terminal nomade qui en fait la demande lors de sa connexion en réseau sur l'un des sites appartenant à l'organisation multisite d'origine. Cette opération est bien entendu réalisée sous le contrôle du serveur S et de l'administrateur réseau responsable de ce dernier.

Toutefois, les ensembles $\left\{P@_{1i}\right\}_{i=1}^{i=I}$, $\left\{P@_{2j}\right\}_{j=1}^{j=J}$ et $\left\{P@_{4l}\right\}_{l=1}^{l=L}$ étant constitués par des ensembles disjoints de valeurs d'adresses, l'ensemble $\left\{P@_{3k}\right\}_{k=1}^{k=K}$ peut être un ensemble non disjoint, recouvrant les ensembles $\left\{P@_{1i}\right\}_{i=1}^{i=I}$ et $\left\{P@_{2j}\right\}_{j=1}^{j=J}$ car les adresses de l'ensemble $\left\{P@_{3k}\right\}_{k=1}^{k=K}$ peuvent être translatées en des adresses $\left\{P@_{4l}\right\}_{l=1}^{l=L}$..

On indique en outre que l'ensemble des adresses temporaires internes est formé soit par des valeurs d'adresses prédéterminées, c'est-à-dire par le sous-ensemble $\left\{P@_{2j}\right\}_{j=1}^{j=J}$ et $\left\{P@_{3k}\right\}_{k=1}^{k=K}$, ces valeurs d'adresses prédéterminées pouvant bien entendu être arbitraires mais contenues dans une plage d'adresses spécifiques déterminée par l'administrateur réseau ou par des valeurs d'adresses calculées par translation. Par exemple les valeurs du sous-ensemble $\left\{P@_{4l}\right\}_{l=1}^{l=L}$ sont calculées à partir des valeurs d'adresses formant des adresses permanentes internes précitées par et sous l'autorité du réseau de rattachement d'origine et de l'administrateur réseau.

En ce qui concerne l'adresse temporaire externe allouée au terminal nomade en position $T_p$ sur la figure $1_c$, pour toute connexion en réseau sur un site quelconque Sp n'appartenant pas à l'organisation multisite d'origine, on indique qu'une telle adresse temporaire peut par exemple être formée par une valeur d'adresse calculée par translation à partir de l'adresse permanente allouée au terminal nomade par l'organisation multisite distincte $O_p$ sous l'autorité de l'administrateur de cette dernière, mais translatée en une adresse IP unique sur l'INTERNET, avant d'atteindre le serveur S au sein de l'organisation multisite d'origine $O_0$, entre l'organisation multisite Op et l'INTERNET.

En ce qui concerne une mise en oeuvre spécifique de l'étape de comparaison $B_1$ de la figure 3a, on indique, à titre d'exemple non limitatif, qu'une telle mise en oeuvre peut consister en une succession d'étapes telles que représentées en figure 3b.

Sur la figure 3a et la figure 3b, la référence de localisation LR est notée LR = $P@_{xy}$ où x désigne la référence de situation du terminal nomade et y une adresse allouée dans cette situation.

A titre d'exemple non limitatif, les étapes précitées peuvent alors comprendre, dans le cadre de la mise en oeuvre de l'étape $B_1$, une étape $B_{11}$ d'appartenance de la référence de localisation à l'ensemble des adresses permanentes internes, une réponse positive à ce test $B_{11}$ permettant de conclure, en une étape $B_{12}$, à la valeur 0 de l'information de discrimination de localisation LI, le terminal $T_x$ étant alors connecté au site d'origine $S_1$ appartenant à l'organisation multisite d'origine $O_0$.

Au contraire, sur réponse négative au test $B_{11}$, un nouveau test $B_{13}$ est appelé de comparaison de la référence de localisation LR à l'ensemble des adresses temporaires internes ainsi que mentionné précédemment dans la description.

Sur réponse positive au test $B_{13}$, à l'information de localisation LI est allouée la valeur LI =1, le terminal $T_x$ étant connecté ainsi à un site $S_x$ distinct du site d'origine $S_1$ mais appartenant à l'organisation multisite d'origine $O_0$.

Au contraire sur réponse négative au test $B_{13}$, alors à l'information de localisation LI est affectée la valeur 2, le terminal nomade $T_x$ étant connecté à un site quelconque Sq n'appartenant pas à l'organisation multisite d'origine $O_0$.

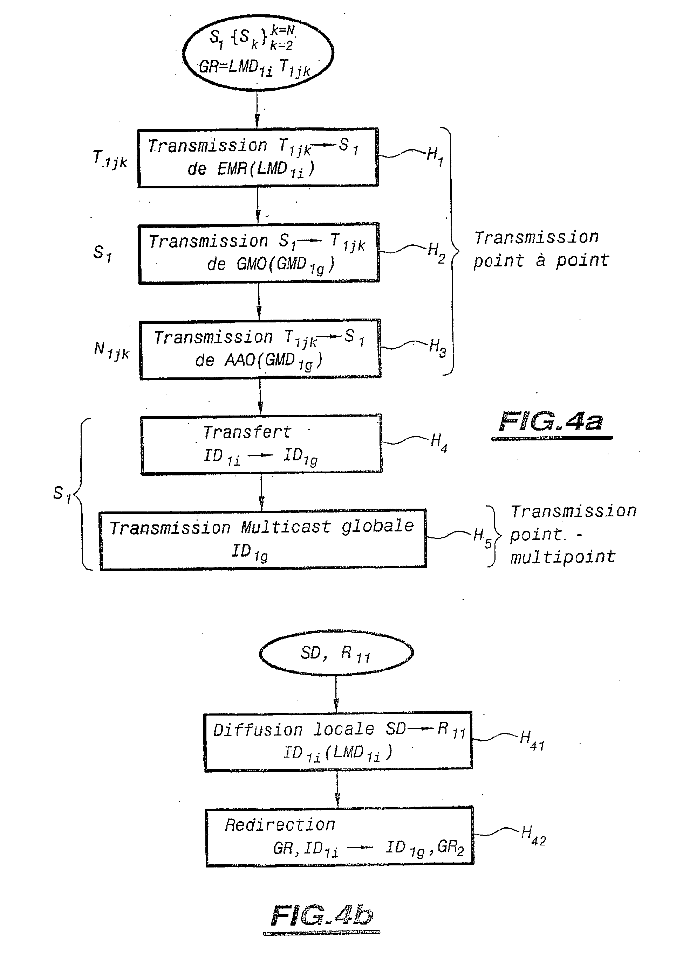

Le processus sui generis de diffusion d'information Multicast étendue, à partir d'une diffusion d'information Multicast locale sur un site d'origine à un utilisateur de poste de travail nomade appartenant à ce site d'origine, vers au moins un site distinct hébergeant ce poste de travail nomade et relié à ce site d'origine par le réseau IP, conforme à l'objet de la présente invention, sera maintenant décrit en liaison avec les figures 4a et 4b.

D'une manière générale, on rappelle que la diffusion d'information Multicast locale notée $LMD_{1i}$ est engendrée à partir d'une source de diffusion d'information SD dédiée à une première adresse de diffusion d'information Multicast locale dans ce site d'origine $S_1$.

En référence à la figure 4a, la diffusion d'information Multicast locale est désignée $LMD_{1i}$ où les références d'adresses 1 et i représentent la première adresse de diffusion d'information Multicast locale dans ce site d'origine, la référence 1 désignant l'adresse du site d'origine $S_1$ et la référence i désignant l'adresse de la diffusion considérée d'information Multicast locale dans le site d'origine précité. La diffusion d'information Multicast locale peut être assimilée à la première adresse de diffusion.

On considère en outre un ensemble de sites distincts $\{S_k\}$, k=2 à k=N, le site d'origine $S_1$ et chacun des sites $S_k$ constituant l'entité ou entreprise multisite précédemment mentionnée dans la description.

Enfin, on considère un poste de travail nomade noté $T_{1jk}$, l'indice 1 indiquant une référence d'appartenance de ce poste nomade au site d'origine $S_1$, la référence j dénotant une référence ou code d'identification du poste de travail nomade considéré, la référence k dénotant la connexion du poste de travail nomade considéré sur le site distinct $S_k$ hébergeant ce dernier et la liaison du poste de travail nomade considéré au site d'origine par l'intermédiaire du réseau IP.

En référence à la figure 4a, le processus sui generis de diffusion d'information Multicast étendue, objet de l'invention, consiste par l'intermédiaire de l'interconnexion du poste de travail nomade au réseau IP, à transmettre, dans une étape $H_1$, du poste de travail nomade $T_{1jk}$ vers le site d'origine $S_1$, un message de requête de diffusion d'information Multicast étendue, ce message de requête étant noté EMR ($LMD_{1i}$).

Ainsi qu'indiqué à l'étape $H_1$ de la figure 4a, le message de requête précité contient au moins la première adresse de diffusion d'information Multicast locale $LMD_{1i}$, constituant l'adresse de diffusion Multicast de groupe GR, ainsi qu'un code d'identification du poste de travail nomade à partir en particulier des indices 1 et références j et k du poste de travail nomade considéré $T_{1jk}$.

Suite à l'identification du poste de travail nomade par le site d'origine à partir des informations contenues dans le message de requête, le processus de diffusion d'information Multicast étendue consiste, en une étape $H_2$, à transmettre du site d'origine $S_1$ vers le poste de travail nomade $T_{1jk}$ un message d'offre d'accès à une diffusion d'information Multicast globale, ce message d'offre GMO($GMD_{1g}$) d'accès étant noté GMO ($GMD_{1g}$) sur la figure 4a. Le message d'offre d'accès précité comprend au moins une deuxième adresse de diffusion d'information Multicast globale $GMD_{1g}$, c'est-à-dire l'adresse de substitution $GR_2$, dont la source de diffusion est identifiée dans le site d'origine.

En référence à la figure 4a et à l'étape $H_2$ de celle-ci, on comprend que la deuxième adresse de diffusion d'information Multicast globale $GMD_{1g}$ comporte la référence à l'indice 1 relative au site d'origine et la référence g à une adresse de diffusion Multicast globale telle que définie de manière spécifique selon la norme RFC2365 précédemment mentionnée dans la description.

Suite à la réception du message d'offre d'accès GMO ($GMD_{1g}$) par le poste de travail nomade $T_{1jk}$, le processus de diffusion d'information Multicast étendue consiste ensuite en une étape $H_3$ à transmettre du poste de travail nomade précité vers le site d'origine $S_1$ par l'intermédiaire du réseau IP un message d'acceptation d'offre d'accès aux informations en diffusion à la deuxième adresse de diffusion d'information Multicast globale.

A l'étape $H_3$ de la figure 4a, le message d'acceptation de l'offre d'accès est noté AAO ($GMD_{1g}$).

Après réception du message d'acceptation d'offre d'accès AAO ($GMD_{1g}$) au niveau du site d'origine $S_1$, le processus de diffusion d'information Multicast étendue comprend une étape $H_4$ consistant à transférer des informations à diffuser, mémorisées à la première adresse de diffusion et notées pour cette raison $ID_{1i}$ à la deuxième adresse de diffusion. Les informations mémorisées sous la deuxième adresse de diffusion étant notées $ID_{1g}$.

Par cette simple opération, les informations diffusées selon une diffusion d'informations Multicast locale sur le site d'origine $S_1$ peuvent alors être diffusées selon une diffusion d'information Multicast étendue par l'intermédiaire de l'étape $H_5$ suivante représentée en figure 4a.

L'étape $H_5$ précitée consiste alors à transmettre par diffusion Multicast globale les informations à diffuser sous la deuxième adresse $ID_{1g}$. Ceci permet au poste de travail nomade $T_{1jk}$ interconnecté sur le site distinct de recevoir sur le site distinct précité $S_k$ des informations en diffusion sous la première adresse de diffusion locale diffusées alors sous la deuxième adresse de diffusion globale.

En référence à la même figure 4a, on indique que les étapes $H_1$, $H_2$ et $H_3$ représentées sur cette dernière, relatives à la transmission entre le poste de travail nomade $T_{1jk}$ et le site d'origine $S_1$ du message de requête de diffusion Multicast IP étendue EMR ($LMD_{1i}$), du message d'offre d'accès à une diffusion Multicast globale GMO ($GMD_{1g}$) et du message d'acceptation d'offre d'accès AAO ($GMD_{1g}$) sont exécutées en mode point à point.

L'exécution de ce mode de transmission pour les étapes précitées est rendue possible grâce à la communication des adresses respectives 1 du site d'origine respectivement k du site distinct considéré, l'indice j ou référence d'adresse du poste de travail nomade pouvant consister alors en un code d'identification de ce dernier.

Au contraire et selon un aspect remarquable du procédé objet de la présente invention, l'étape $H_5$ de transmission Multicast globale est effectuée en mode point-multipoint.

On comprend, dans ces conditions, que le processus de transmission des informations diffusées sous la deuxième adresse, transmission Multicast globale à l'étape $H_5$, est alors comparable à celui décrit en liaison avec la figure 1 a précédemment décrite dans la description mais que, toutefois, la transmission des informations diffusées sous la deuxième adresse de diffusion Multicast globale $ID_{1g}$ est effectuée non plus localement sur le seul site d'origine mais également sur le ou les sites distincts de l'entité multi-sites.

Un mode de mise en oeuvre particulier de l'étape $H_4$ consistant à transférer les informations à diffuser de la première à la deuxième adresse de diffusion sera maintenant décrit en liaison avec la figure 4b.

Le mode de mise en oeuvre précité concerne le cas particulier non limitatif dans lequel le site d'origine $S_1$ comprend un serveur de diffusion SD connecté au réseau IP par l'intermédiaire d'un routeur noté $R_{11}$ par exemple. Ce cas particulier correspond de manière avantageuse à la situation d'une entreprise multisite pour laquelle l'un des sites d'origine $S_1$ est muni d'un serveur de diffusion SD comportant un nombre important de clients, l'utilisation d'un routeur dans cette situation étant préférable.

En référence à la figure 4b, on indique que l'étape $H_4$ précitée peut alors comporter une étape $H_{41}$ de diffusion Multicast locale des informations à diffuser mémorisées à la première adresse $LMD_{1i}$ du serveur de diffusion vers le routeur $R_{11}$.

L'étape $H_{41}$ précitée est suivie d'une étape $H_{42}$ consistant en une étape de redirection des informations à diffuser $ID_{1i}$ par substitution de la deuxième adresse de diffusion Multicast globale $GMD_{1g}$ ou $GR_2$ à la première adresse de diffusion locale $LMD_{1i}$ constituant l'adresse de diffusion Multicast de groupe GR. On comprend en particulier que cette étape de redirection $H_{42}$ peut consister simplement à allouer aux informations diffusées localement $ID_{1i}$ la deuxième adresse de diffusion Multicast globale pour engendrer en fait les données mémorisées à la deuxième adresse de diffusion, notées $ID_{1g}$.

On comprend, en particulier, que l'étape de redirection précitée peut simplement consister à associer aux données mémorisées support de l'information à diffuser, mémorisées au niveau du routeur $R_{11}$, une structure de données simple comportant la première et la deuxième adresses, la structure de données pouvant consister simplement en une liste comprenant au moins la première et la deuxième adresse précitée ou par toute structure de données équivalente.

Compte tenu du mode opératoire du processus de diffusion Multicast étendue tel que décrit en figure 4a et 4b, on indique que, pour une pluralité de messages de requête de diffusion Multicast étendue, relative à une même première adresse de diffusion Multicast locale, émanant d'une pluralité de stations de travail nomades appartenant au site d'origine et interconnectées chacune au réseau IP sur un site distinct différent, l'étape $H_5$ consistant à transmettre par diffusion Multicast globale les informations à diffuser sous la deuxième adresse permet alors de créer un arbre de diffusion Multicast globale, dont l'élément racine est constitué par l'un des routeurs communs aux branches de diffusion constitutive de l'arbre de diffusion Multicast globale précité.

Toutefois, un mode de mise en oeuvre spécifique du processus de diffusion Multicast étendue peut être envisagé, ce mode de réalisation apparaissant particulièrement avantageux pour assurer une gestion cohérente des types de diffusion d'information Multicast locale respectivement globale et de l'espace mémoire finalement occupé dans ce but, tant au niveau du serveur de diffusion SD que du routeur $R_{11}$.

Selon le mode de mise en oeuvre particulièrement avantageux précité, la deuxième adresse de diffusion Multicast globale $GMD_{1g}$ peut être maintenue et validée pour une diffusion d'information Multicast locale $LMD_{1i}$ à la première adresse de manière permanente. La notion de diffusion d'information permanente s'entend du maintien de l'adresse globale tant qu'il existe des abonnés externes.

Dans ces conditions, on comprend que pour assurer le maintien et la validation permanente de la deuxième adresse de diffusion d'information Multicast globale $GMD_{1g}$, la structure de données, telle qu'une liste $[LMD_{1i}, GM_{1g}]$, est mémorisée et sécurisée de manière permanente au niveau du routeur, la première et la deuxième adresses étant ainsi mises en correspondance biunivoque de manière permanente.

Dans ces conditions, l'étape $H_4$ consistant à transférer des informations à diffuser de la première à la deuxième adresse de diffusion peut alors être supprimée pour tout message de requête de diffusion Multicast étendue à cette deuxième adresse, ultérieur au premier message de requête de diffusion Multicast IP étendue à la deuxième adresse précitée.

On comprend en particulier que la notion de suppression de l'étape $H_4$ concerne simplement la suppression du transfert physique des données mémorisées à la première adresse vers la deuxième adresse, ce transfert physique pouvant alors être simplement remplacé par l'appel de la deuxième adresse de diffusion d'information Multicast globale à partir de la structure de données permanentes précédemment mentionnée.

Pour une description plus détaillée du processus sui generis de discrimination du site de connexion vis-à-vis du site et/ou de l'organisation multisite d'origine respectivement du processus sui generis de diffusion Multicast globale étendue, on pourra utilement se reporter aux demandes de brevet français FR 03 09873 et FR 03 12688 déposées antérieurement respectivement le 12/08/2003 et le 29/10/2003 au nom de la demanderesse.

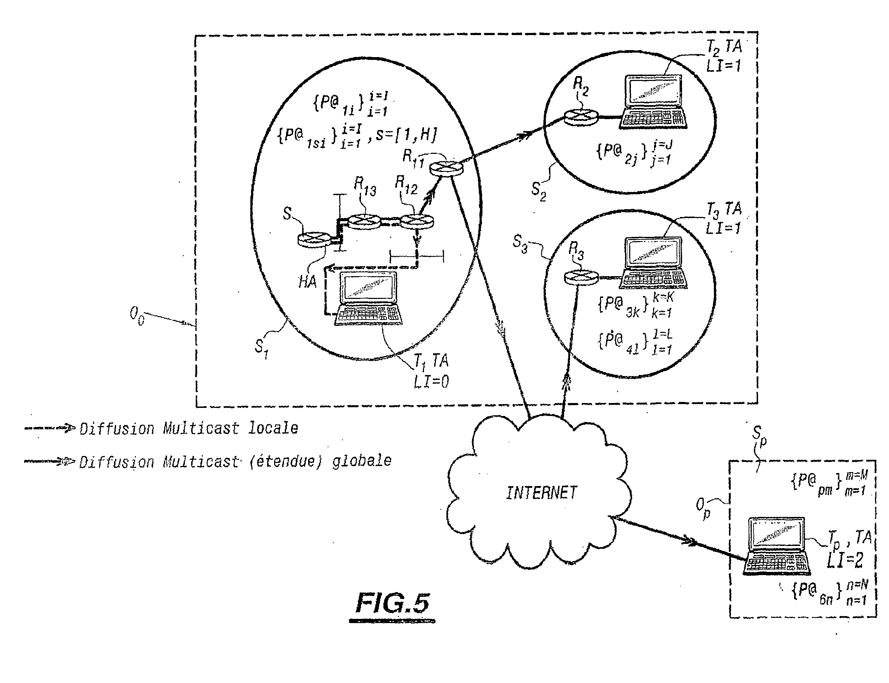

Une description plus détaillée d'un système de diffusion Multicast vers un terminal nomade en fonction de la localisation de la connexion en réseau IP de ce terminal, conforme à l'objet de la présente invention, sera maintenant donnée en liaison avec la figure 5.

Dans la figure 5, les mêmes notations désignent les mêmes éléments que dans le cas des figures précédentes.

Ainsi que représenté sur la figure 5 précitée, le système objet de l'invention comporte au moins au niveau du site d'origine $S_1$ un module de discrimination de la localisation du terminal nomade $T_x$ avec x = 1, 2, 3, p sur la figure 5 vis-à-vis de son site d'origine $S_1$ et/ou de son organisation d'origine $O_0$ à partir du message de signalisation ainsi que décrit précédemment dans la description en liaison avec la figure 2a.

Sur la figure 5, le module de discrimination porte la référence HA et peut être implanté au niveau du serveur S associé au réseau de rattachement d'origine du terminal nomade considéré.

Bien entendu, le système objet de l'invention comporte également un module de transmission implanté au niveau du site d'origine $S_1$, ce module de transmission permettant d'assurer la transmission vers le terminal nomade $T_x$ d'une information de discrimination de localisation d'information LI précédemment décrite dans la description.

Le module de transmission n'est pas représenté de manière explicite sur la figure 5 car le serveur S est bien entendu muni, de manière classique, de tout module de transmission de message vers les terminaux, en particulier les terminaux nomades dont il a la charge.

Enfin, le système objet de l'invention comporte au niveau du terminal nomade référencé $T_x$ et quelque soit la position de ce dernier x = 1, 2, 3, p et pour toute demande d'accès à une diffusion Multicast de groupe destinée au site d'origine $S_1$ et relative à une diffusion Multicast locale au site respectivement à l'organisation d'origine $S_1$, $O_0$ de ce terminal nomade un module de susbstitution à cette demande d'accès d'une requête d'accès à une diffusion Multicast étendue, permettant l'accès à la diffusion Multicast locale précitée, lorsque l'information de discrimination LI de localisation du terminal nomade considéré désigne une connexion de ce dernier à l'extérieur de son site d'origine $S_1$ respec-tivement de son organisation d'origine $O_0$.

Sur la figure 5, le module de substitution est noté TA, ce module étant bien entendu implanté au niveau du terminal nomade quelque soit la position de connexion de ce dernier.

En ce qui concerne le module de discrimination HA implanté au niveau du serveur S du site d'origine $S_1$, on indique que ce module de discrimination comporte avantageusement un module de base de données comprenant un premier ensemble d'adresses permanentes internes allouées par le réseau de rattachement d'origine ou le site d'origine $S_1$ à l'ensemble des terminaux nomades rattachés à ce réseau de rattachement d'origine et un deuxième ensemble des adresses temporaires internes susceptibles d'être allouées à l'ensemble des terminaux nomades pour toute connexion sur un autre site appartenant à cette organisation d'origine. Les ensembles précités sont représentés bien entendu en figure 3a.

Le module de discrimination comporte en outre un module de comparaison pour identification de la référence de localisation LR aux valeurs d'adresses de l'un au moins des premier et deuxième ensembles précités, c'est-à-dire aux adresses permanentes respectivement temporaires internes précédemment mentionnées.

Le module de transmission permet alors d'assurer la transmission du réseau de rattachement d'origine vers le terminal nomade d'un message d'acquittement de signalisation contenant l'information de discrimination de localisation LI. Cette information désigne soit la connexion du terminal nomade considéré $T_x$ sur son réseau de rattachement d'origine ou son site de rattachement d'origine $S_1$ sur identification de la référence de localisation LR dans le premier ensemble des adresses permanentes internes, soit la connexion du terminal nomade $T_x$ en réseau sur un autre site appartenant à l'organisation multisite d'origine, les sites $S_2$ ou $S_3$ sur la figure 5 sur identification de la référence de localisation dans le deuxième ensemble des adresses temporaires internes, ou encore la connexion du terminal nomade en réseau sur un site quelconque terminal en position $T_p$ lorsque ce site Sp n'appartient pas à l'organisation multisite d'origine en l'absence d'identification de la référence de localisation dans l'un et l'autre des premier et deuxième ensemble d'adresses permanentes respectivement temporaires internes précédemment citées.

Sur la figure 5, on a ainsi représenté le terminal nomade $T_x$ en position de connexion sur son site d'origine $S_1$, l'information de localisation LI étant égale à 0 dans l'exemple précédemment mentionné dans la description, le terminal nomade connecté sur le site $S_2$ ou le site $S_3$ distinct du site d'origine $S_1$ mais appartenant à l'organisation d'origine $O_0$, l'information de localisation LI ayant pour valeur la valeur 1 dans cette situation et enfin, le terminal nomade connecté à un site quelconque Sp appartenant à une organisation quelconque Op distincte de l'organisation d'origine $O_0$, l'infor-mation de localisation LI, dans cette situation, ayant pour valeur la valeur 2 ainsi que mentionné précédemment dans la description.

Bien entendu, et de manière non limitative particulièrement avantageuse, le module de discrimination de la localisation du terminal nomade considéré, module dénoté HA sur la figure 5, est formé par un agent logiciel implanté sur le site d'origine $S_1$ du terminal nomade. Il peut en particulier être implanté au niveau du serveur S précédemment mentionné.

De même, en ce qui concerne le module de substitution de la demande d'accès formulée par le terminal nomade

$T_x$, on indique que ce module de substitution noté TA comporte avantageusement un module de discrimination de la classe de l'adresse de diffusion Multicast demandée vis-à-vis des classes de diffusion Multicast globale respectivement locales au site et/ou à l'organisation d'origine $S_1$ et $O_0$ du terminal nomade considéré.

Il comporte également un module de discrimination de la valeur de l'information de discrimination de localisation LI dont dispose le terminal nomade après connexion et transmission par le serveur S implanté sur le site d'origine $S_1$ auquel est rattaché le terminal nomade considéré.

Le module de discrimination de la classe de l'adresse de diffusion Multicast demandé vis-à-vis des classes de diffusion Multicast globales et/ou locales et le module de discrimination de la valeur de l'information de discrimination de localisation de ce terminal nomade sont avantageusement formés par un agent logiciel noté TA et associés au terminal nomade considéré, cet agent logiciel étant implanté sur le terminal nomade précité et bien entendu exécutable par ce dernier.

Le processus d'exécution par l'agent logiciel TA considéré correspond à celui décrit en liaison avec les figures 3a et 3b.

Enfin, on indique que le procédé et le système de diffusion Multicast vers un terminal nomade en fonction de la localisation et de la connexion en réseau IP de ce dernier conforme à l'objet de la présente invention sont avantageusement mis en oeuvre à partir d'un produit logiciel enregistré sur un support de mémorisation, ce produit logiciel étant bien entendu exécuté par un ordinateur.

Le produit logiciel permet l'implantation et l'exécution de l'agent logiciel HA au niveau du serveur S du site d'origine $S_1$ et, en particulier, de l'ensemble des opérations et étapes représentées en figures 2a, 3a et 3b précédemment décrites dans la description.

Le procédé et le système objets de la présente invention sont également avantageusement mis en oeuvre à partir d'un produit logiciel permettant l'implantation et l'exécution de l'agent logiciel TA implanté sur chaque terminal nomade conformément au processus d'exécution tel que représenté en figures 2a, 2b et 4a, 4b précédemment décrites dans la description.

**Revendications**

1. Procédé de diffusion Multicast vers un terminal nomade ($T_x$) en fonction de la localisation de la connexion en réseau IP de ce dernier, **caractérisé en ce que**, suite à une connexion courante de ce terminal nomade sur un site ($S_x$) appartenant ou non au site et ou à l'organisation d'origine ($O_o$) auquel ce terminal nomade est rattaché et à la transmission d'un message de signalisation (RM(LR)) de ce terminal nomade vers ledit site d'origine, ledit procédé consiste au moins à :

   - au niveau dudit site d'origine ($S_1$),

     - discriminer (B) la localisation dudit terminal nomade vis-à-vis de son site d'origine respectivement de son organisation d'origine, à partir dudit message de signalisation,
     - transmettre audit terminal nomade une information de discrimination de localisation (AR(LI)); et

   - au niveau dudit terminal nomade, pour toute demande (AD(GR)) dudit terminal nomade d'accès à une diffusion Multicast de groupe destinée au site d'origine et relative à une diffusion Multicast locale au site respectivement à l'organisation d'origine dudit terminal nomade,

     - substituer (F) à ladite demande d'accès (AD(GR)), lorsque ladite information de discrimination de localisation désigne une connexion dudit terminal nomade à l'extérieur de son site d'origine respectivement de son organisation d'origine, une requête d'accès à une diffusion Multicast étendue (AR($GR_2$)) permettant l'accès à ladite diffusion Multicast locale ;
     - transmettre (I), vers ledit site d'origine, ladite requête d'accès à ladite diffusion Multicast étendue.

2. Procédé selon la revendication 1, **caractérisé en ce que**, pour un terminal nomade susceptible d'opérer dans et/ou hors de son réseau de rattachement d'origine, audit terminal nomade étant allouées, par ledit site de rattachement d'origine, une adresse permanente interne pour toute connexion en réseau de ce terminal nomade sur un site appartenant à ce réseau de rattachement d'origine, une adresse temporaire interne pour toute connexion en réseau de ce terminal sur un autre site, appartenant à ladite organisation multisite d'origine, et, par tout site quelconque n'appartenant pas à ladite organisation d'origine, une adresse temporaire externe pour toute connexion en réseau dudit terminal nomade sur ledit site quelconque, lesdites adresses formant pour ledit terminal une référence de localisation (LR), ladite étape consistant à discriminer la localisation dudit terminal nomade vis-à-vis de son site respectivement son organisation d'origine consiste au moins à :

- transmettre dudit terminal nomade vers ledit réseau de rattachement d'origine ledit message de signalisation comportant au moins ladite référence de localisation (LR) ;
- comparer ($B_1$), pour identification, ladite référence de localisation aux valeurs d'adresses de l'un au moins des ensembles formés par l'ensemble des adresses permanentes internes allouées à l'ensemble des terminaux nomades rattachés à ce réseau de rattachement d'origine et susceptibles d'opérer dans le réseau de rattachement d'origine et par l'ensemble des adresses temporaires internes allouées à cet ensemble de terminaux nomades pour toute connexion sur un autre site appartenant à ladite organisation d'origine ; et
- transmettre ($B_2$) du site de rattachement d'origine vers ledit terminal nomade un message d'acquittement de signalisation contenant au moins ladite information de discrimination de localisation du terminal nomade désignant soit la connexion dudit terminal nomade sur son réseau de rattachement d'origine sur identification de ladite référence de localisation dans l'ensemble des adresses temporaires internes, soit la connexion dudit terminal nomade en réseau sur un autre site appartenant à ladite organisation d'origine sur identification de ladite référence de localisation dans l'ensemble des adresses temporaires internes, ou encore la connexion dudit terminal nomade en réseau sur un site quelconque n'appartenant pas à ladite organisation d'origine, en l'absence d'identification de ladite référence de localisation dans l'un et l'autre ensemble des adresses permanentes internes, ensemble des adresses temporaires internes.

3. Procédé selon l'une des revendications 1 ou 2, **caractérisé en ce que** ladite étape consistant à substituer, à ladite demande d'accès, une requête d'accès à une diffusion Multicast étendue consiste au moins à :

   ▪ Discriminer ($D_1$) la classe de l'adresse de diffusion Multicast demandée vis-à-vis des classes de diffusion Multicast globale (GA) respectivement locale au site respectivement l'organisation d'origine ; et

      - sur discrimination d'une adresse de diffusion Multicast demandée appartenant à la classe des adresses de diffusion globale, transmettre (E) une requête d'accès à ladite adresse de diffusion Multicast demandée ; sinon
      - sur discrimination ($D_2$) d'une adresse de diffusion Multicast demandée appartenant à la classe des adresses de diffusion Multicast locale à ladite organisation et/ou au site d'origine, auxquels appartient ledit terminal nomade, en fonction de ladite information de discrimination de localisation,

         ➢ si ledit terminal nomade est connecté à un site appartenant à son organisation d'origine et si ladite adresse de diffusion demandée est une adresse globale à l'organisation d'origine, ou,

         ➢ si ledit terminal nomade est connecté à son site de rattachement d'origine et si ladite adresse de diffusion demandée est une adresse locale audit site de rattachement d'origine,

            o transmettre (E) une requête d'accès à ladite adresse de diffusion Multicast demandée ; sinon

         ➢ si ledit terminal nomade est connecté à un site distinct de son site de rattachement d'origine mais si l'adresse de diffusion demandée est locale audit site de rattachement d'origine, ou

         ➢ si ledit terminal nomade est connecté à un site n'appartenant pas à son organisation d'origine mais si ladite adresse de diffusion demandée est une adresse globale locale à ladite organisation d'origine,

            o transmettre (H) une requête d'accès à une diffusion Multicast étendue à partir d'une diffusion d'information Multicast locale, ladite requête d'accès à une diffusion Multicast étendue permettant, à partir du site de rattachement d'origine, d'attribuer et transmettre audit terminal nomade une autre adresse de diffusion Multicast globale, sous laquelle ladite diffusion Multicast locale est accessible sur le site sur lequel ledit terminal est connecté ; et
            o transmettre (I) dudit terminal nomade vers ledit site de rattachement d'origine de ce dernier une demande d'accès comportant ladite autre adresse de diffusion Multicast globale.

4. Procédé selon l'une quelconque des revendications 1 à 3, **caractérisé en ce que** l'étape consistant à transmettre une requête d'accès à une diffusion Multicast étendue à partir d'une diffusion d'information Multicast locale à l'organisation respectivement au site d'origine dudit terminal nomade, cette diffusion d'information Multicast locale étant engendrée par une source de diffusion d'information implantée à une première adresse ($LMD_{1i}$) de diffusion d'information Multicast locale dans ce site d'origine, consiste à :

- transmettre, dudit terminal nomade vers ledit site d'origine un message de requête de diffusion d'information Multicast étendue, ledit message de requête contenant au moins ladite première adresse de diffusion d'information Multicast locale ($LMD_{1i}$) et un code d'identification dudit terminal nomade ; et, suite à l'identification dudit terminal nomade par ledit site d'origine,

- transmettre, dudit site d'origine vers ledit poste de travail nomade, un message d'offre d'accès à une diffusion d'information Multicast globale, ledit message d'offre d'accès comprenant au moins une deuxième adresse ($GMD_{1g}$) de diffusion d'information Multicast globale, dont la source de diffusion est identifiée dans ledit site d'origine ; et, suite à la réception dudit message d'offre d'accès par ledit terminal nomade,

- transmettre du terminal nomade vers ledit site d'origine, un message d'acceptation d'offre d'accès aux informations en diffusion à ladite deuxième adresse de diffusion d'information Multicast globale ; et, après réception du message d'acceptation d'offre d'accès au niveau dudit site d'origine,

- transférer les informations à diffuser de la première à la deuxième adresse de diffusion ; et

- transmettre, par diffusion Multicast globale les informations à diffuser sous la deuxième adresse, ce qui permet audit terminal nomade interconnecté sur un site n'appartenant pas audit site respectivement à ladite organisation d'origine de recevoir, sur ledit site, lesdites informations en diffusion sous la première adresse en diffusion locale, diffusées sous la deuxième adresse de diffusion globale.

5. Système de diffusion Multicast vers un terminal nomade ($T_x$) en fonction de la localisation de la connexion en réseau IP de ce dernier, suite à une connexion courante de ce terminal nomade sur un site ($S_X$) appartenant ou non au site et/ou à l'organisation d'origine ($O_0$) auquel ce terminal nomade est rattaché et à la transmission d'un message de signalisation de ce terminal nomade vers ce site d'origine ($S_1$), **caractérisé en ce que** ce système comporte au moins :

- au niveau dudit site d'origine,

  - des moyens de discrimination de la localisation de ce terminal nomade vis-à-vis de son site d'origine respectivement de son organisation d'origine, à partir de ce message de signalisation, et
  - des moyens de transmission à ce terminal nomade d'une information de discrimination de localisation ; et

- au niveau de ce terminal nomade, pour toute demande de ce terminal nomade d'accès à une diffusion Multicast de groupe destinée au site d'origine et relative à une diffusion Multicast locale au site respectivement à l'organisation d'origine de ce terminal nomade,

  - des moyens de substitution à cette demande d'accès, lorsque cette information de discrimination de localisation désigne une connexion de ce terminal nomade à l'extérieur de son site d'origine respectivement de son organisation d'origine, d'une requête d'accès à une diffusion Multicast étendue permettant l'accès à cette diffusion Multicast locale, et
  - des moyens de transmission vers le site d'origine de cette requête d'accès à cette diffusion Multicast étendue.

6. Système selon la revendication 5, **caractérisé en ce que** lesdits moyens de discrimination sont formés par au moins :

- des moyens de base de données comprenant au moins un premier ensemble d'adresses permanentes internes allouées, par ce réseau de rattachement d'origine, à l'ensemble des terminaux nomades rattachés à ce réseau de rattachement d'origine et un deuxième ensemble des adresses temporaires internes susceptibles d'être allouées à cet ensemble de terminaux nomades, pour toute connexion sur un autre site appartenant à cette organisation d'origine ;

- des moyens de comparaison, pour identification, de ladite référence de localisation aux valeurs d'adresses de l'un au moins des premier et deuxième ensembles d'adresses permanentes respectivement temporaires internes ; et

- des moyens de transmission, dudit réseau de rattachement d'origine vers le terminal nomade, d'un message d'acquittement de signalisation contenant au moins une information de discrimination de localisation désignant soit la connexion de ce terminal nomade sur son réseau de rattachement d'origine sur identification de cette référence de localisation dans ce premier ensemble des adresses permanentes internes, soit la connexion de ce terminal nomade en réseau sur un autre site appartenant à cette organisation multisite d'origine sur identification de cette référence de localisation dans le deuxième ensemble des adresses temporaires internes, ou encore la connexion de ce terminal nomade en réseau sur un site quelconque n'appartenant pas à cette organisation multisite d'origine en l'absence d'identification de cette référence de localisation dans l'un et l'autre des premier et deuxième ensembles des adresses permanentes respectivement temporaires internes.

7.  Système selon la revendication 5 ou 6, **caractérisé en ce que** lesdits moyens de substitution de cette demande d'accès comportent au moins :

    ▪ des moyens de discrimination de la classe de l'adresse de diffusion Multicast demandée vis-à-vis des classes de diffusion Multicast globale respectivement locale au site respectivement à l'organisation d'origine, et
    ▪ des moyens de discrimination de la valeur de l'information de discrimination de localisation de ce terminal nomade.

8.  Système selon l'une des revendications 5 à 7, **caractérisé en ce que** lesdits moyens de discrimination de la localisation de ce terminal sont formés par un agent logiciel implanté sur le site d'origine dudit terminal nomade.

9.  Système selon l'une des revendications 5 à 8, **caractérisé en ce que** lesdits moyens de substitution sont formés par un agent logiciel implanté sur ce terminal nomade et exécutable par ce dernier.

10. Produit logiciel enregistré sur un support de mémorisation pour exécution par un ordinateur, **caractérisé en ce que** ledit produit logiciel est configuré pour la mise en oeuvre de toutes les étapes du procédé selon l'une quelconque des revendications 1 à 4 et du système selon les revendications 5 à 9 précédentes, ledit produit logiciel, lorsqu'il est exécuté par un ordinateur implanté sur le site d'origine de ce terminal nomade, permettant de discriminer la localisation de ce terminal nomade vis-à-vis de son site d'origine respectivement de son organisation d'origine, à partir d'un message de signalisation.

11. Produit logiciel enregistré sur un support de mémorisation pour exécution par un ordinateur, **caractérisé en ce que** ledit produit logiciel est configuré pour la mise en oeuvre de toutes les étapes du procédé selon l'une quelconque des revendications 1 à 4 et du système selon les revendications 5 à 9 précédentes, ledit produit logiciel, lorsqu'il est exécuté par un ordinateur nomade connecté hors de son site d'origine respectivement de son organisation d'origine permettant de susbstituer à toute demande d'accès de ce terminal nomade à une diffusion Multicast locale au site respectivement à l'organisation d'origine de ce terminal nomade une requête d'accès à une diffusion Multicast étendue permettant l'accès à cette diffusion Multicast locale.

12. Terminal nomade comportant des moyens de communication aptes à établir une connexion avec un site d'origine auquel ce terminal nomade est rattaché, **caractérisé en ce qu'**il comporte en outre des moyens de synchronisation aptes à transmettre un message de synchronisation vers le site d'origine, et des moyens de réception d'une information de discrimination de localisation envoyée en retour par le site d'origine, les moyens de réception étant connectés à des moyens d'accès à une diffusion multicast de groupe local au site d'origine adapté pour transformer une requête d'accès à une diffusion multicast locale en une requête d'accès à une diffusion multicast étendue permettant l'accès à la diffusion multicast locale quand l'information de discrimination de localisation désigne une connexion du terminal nomade à l'extérieur du site d'origine.

**Patentansprüche**

1.  Verfahren zur Multicast-Ausstrahlung zu einem roamenden Endgerät ($T_x$) in Abhängigkeit von der Lokalisierung des IP-Netzanschlusses dieses letztgenannten, **dadurch gekennzeichnet, dass** nach einem laufenden Anschluss dieses roamenden Endgeräts an einen Standort ($S_x$), der dem Ursprungsstandort oder der Ursprungsorganisation ($O_o$), mit dem dieses roamende Endgerät verbunden ist, angehört oder nicht, und nach der Übertragung einer Nachricht (RM(LR)) von diesem roamenden Endgerät zu dem Ursprungsstandort, das Verfahren mindestens darin besteht:

    ▪ hinsichtlich des Ursprungsstandortes ($S_1$),

        ▪ die Lokalisierung des roamenden Endgeräts gegenüber seinem Ursprungsstandort bzw. seiner Ursprungsorganisation auf Basis der Nachricht zu diskriminieren,
        ▪ an das roamende Endgerät eine Information über die Diskriminierung der Lokalisierung (AR(LI)) zu übertragen; und

    ▪ hinsichtlich des roamenden Endgeräts für jede Zugangsanfrage (AD(GR)) des roamenden Endgeräts zu einer Multicast-Gruppenausstrahlung, die für den Ursprungsstandort bestimmt ist und sich auf eine lokale Multicast-Ausstrahlung am Ursprungsstandort bzw. an der Ursprungsorganisation des roamenden Endgeräts bezieht,

- die Zugangsanfrage (AD(GR)), wenn die Information über die Diskriminierung einer Lokalisierung einen Anschluss des roamenden Endgeräts außerhalb seines Ursprungsstandorts bzw. seiner Ursprungsorganisation bezeichnet, durch einen Zugangsantrag zu einer erweiterten Multicast-Ausstrahlung (AR(GR$_2$)), die den Zugang zu der lokalen Multicast-Ausstrahlung ermöglicht, zu ersetzen (F) ;
- zu dem Ursprungsstandort den Zugangsantrag zu der erweiterten Multicast-Ausstrahlung zu übertragen (I).

2. Verfahren nach Anspruch 1, **dadurch gekennzeichnet, dass** für ein roamendes Endgerät, das geeignet ist, innerhalb und/oder außerhalb seines Ursprungsheimatnetzes zu operieren, wobei dem roamenden Endgerät von dem Ursprungsheimatstandort eine permanente interne Adresse für jeden Anschluss dieses roamenden Endgeräts im Netz an einem Standort, der diesem Ursprungsheimatnetz angehört, eine temporäre interne Adresse für jeden Anschluss dieses Endgeräts im Netz an einem anderen Standort, der der Ursprungsorganisation mit mehreren Standorten angehört, und für jeden beliebigen Standort, der nicht der Ursprungsorganisation angehört, eine temporäre externe Adresse für jeden Anschluss des roamenden Endgeräts im Netz an dem beliebigen Standort zugewiesen wird, wobei die Adressen für das Endgerät eine Lokalisierungsreferenz (LF) bilden, wobei der Schritt, der darin besteht, die Lokalisierung des roamenden Endgeräts gegenüber seinem Standort bzw. seiner Ursprungsorganisation zu diskriminieren, mindestens darin besteht:

- von dem roamenden Endgerät zu dem Ursprungsheimatnetz die Nachricht, die mindestens die Lokalisierungsreferenz (LR) umfasst, zu übertragen;
- zur Identifikation die Lokalisierungsreferenz mit den Adressenwerten mindestens einer der Gesamtheiten zu vergleichen (B$_1$), die von der Gesamtheit der internen permanenten Adressen, die der Gesamtheit der mit diesem Ursprungsheimatnetz verbundenen roamenden Endgeräten zugewiesen und geeignet sind, in dem Ursprungsheimatnetz zu operieren, und von der Gesamtheit der temporären internen Adressen gebildet sind, die dieser Gesamtheit von roamenden Endgeräten für jeden Anschluss an einen anderen Standort, der der Ursprungsorganisation angehört, zugewiesen sind; und
- von dem Ursprungsheimatstandort zu dem roamenden Endgerät eine Quittierungsnachricht zu übertragen (B$_2$), die mindestens die Information über die Diskriminierung der Lokalisierung des roamenden Endgeräts enthält, die entweder den Anschluss des roamenden Endgeräts an sein Ursprungsheimatnetz bei Identifikation der Lokalisierungsreferenz in der Gesamtheit der temporären internen Adressen oder den Anschluss des roamenden Terminals an das Netz an einem anderen Standort, der der Ursprungsorganisation angehört, bei Identifikation der Lokalisierungsreferenz in der Gesamtheit der temporären internen Adressen oder auch den Anschluss des roamenden Terminals an das Netz an einem beliebigen Standort, der nicht der Ursprungsorganisation angehört, bei Fehlen einer Identifikation der Lokalisierungsreferenz in der einen und der anderen Gesamtheit der permanenten internen Adressen, Gesamtheit der temporären internen Adressen bezeichnet.

3. Verfahren nach einem der Ansprüche 1 oder 2, **dadurch gekennzeichnet, dass** der Schritt, der darin besteht, die Zugangsanfrage durch einen Zugangsantrag zu einer erweiterten Multicast-Ausstrahlung zu ersetzen, mindestens darin besteht:

- die Klasse der angeforderten Multicast-Ausstrahlungsadresse gegenüber den Klassen einer globalen bzw. lokalen Multicast-Ausstrahlung (GA) am Ursprungsstandort bzw. bei der Ursprungsorganisation zu diskriminieren (D$_1$); und

- bei Diskriminierung einer angeforderten Multicast-Ausstrahlungsadresse, die der Klasse der globalen Ausstrahlungsadressen angehört, einen Zugangsantrag an die angeforderte Multicast-Ausstrahlungsadresse zu übertragen (E); anderenfalls
- bei Diskriminierung (D$_2$) einer angeforderten Multicast-Ausstrahlungsadresse, die der Klasse der lokalen Multicast-Ausstrahlungsadressen bei der Ursprungsorganisation und/oder am Ursprungsstandort angehört, denen das roamende Endgerät angehört, in Abhängigkeit von der Information über die Diskriminierung der Lokalisierung,

  ➢ wenn das roamende Endgerät an einen Standort angeschlossen ist, der seiner Ursprungsorganisation angehört, und wenn die angeforderte Ausstrahlungsadresse eine globale Adresse an der Ursprungsorganisation ist, oder

> wenn das roamende Endgerät an seinen Ursprungsheimatstandort angeschlossen ist, und wenn die angeforderte Ausstrahlungsadresse eine lokale Adresse am Ursprungsheimatstandort ist,

∘ einen Zugangsantrag an die angeforderte Multicast-Ausstrahlungsadresse zu übertragen (E); andernfalls

> wenn das roamende Endgerät an einen von seinem Ursprungsheimatstandort getrennten Standort angeschlossen ist, aber wenn die angeforderte Ausstrahlungsadresse lokal am Ursprungsheimatstandort ist, oder

> wenn das roamende Endgerät an einen Standort angeschlossen ist, der nicht seiner Ursprungsorganisation angehört, aber wenn die angeforderte Ausstrahlungsadresse eine lokale globale Adresse bei der Ursprungsorganisation ist,

∘ einen Zugangsantrag zu einer erweiterten Multicast-Ausstrahlung von einer lokalen Multicast-Informationsausstrahlung zu übertragen (H), wobei es der Zugangsantrag zu einer erweiterten Multicast-Ausstrahlung ermöglicht, vom Ursprungsheimatstandort aus dem roamenden Endgerät eine weitere globale Multicast-Ausstrahlungsadresse zuzuweisen und an dieses zu übertragen, unter der die lokale Multicast-Ausstrahlung an dem Standort, an dem das Endgerät angeschlossen ist, zugänglich ist; und
∘ von dem roamenden Endgerät zu dem Ursprungsheimatstandort dieses letztgenannten eine Zugangsanfrage, umfassend die andere globale Multicast-Ausstrahlungsadresse, zu übertragen (I).

4. Verfahren nach einem der Ansprüche 1 bis 3, **dadurch gekennzeichnet, dass** der Schritt, der darin besteht, einen Zugangsantrag zu einer erweiterten Multicast-Ausstrahlung von einer lokalen Multicast-Informationsausstrahlung an die Ursprungsorganisation bzw. den Ursprungsstandort des roamenden Endgeräts zu übertragen, wobei diese lokale Multicast-Informationsausstrahlung durch eine Informationsausstrahlungsquelle erzeugt wird, die an einer ersten Adresse ($LMD_{1i}$) einer lokalen Multicast-Ausstrahlungsinformation an diesem Ursprungsstandort eingerichtet ist, darin besteht:

- von dem roamenden Endgerät zu dem Ursprungsstandort eine Nachricht eines Antrags auf eine erweiterte Multicast-Informationsausstrahlung zu übertragen, wobei die Antragsnachricht mindestens die erste lokale Multicast-Informationsausstrahlungsadresse ($LMD_{1i}$) und einen Identifikationscode des roamenden Endgeräts enthält; und nach der Identifikation des roamenden Endgeräts durch den Ursprungsstandort,
- von dem Ursprungsstandort zu dem roamenden Endgerät eine Nachricht eines Zugangsangebots zu einer globalen Multicast-Informationsausstrahlung zu übertragen, wobei die Nachricht über das Zugangsangebot mindestens eine zweite Adresse ($GMD_{1g}$) einer globalen Multicast-Informationsausstrahlung umfasst, deren Ausstrahlungsquelle am Ursprungsstandort identifiziert wird; und nach dem Empfang der Nachricht über das Zugangsangebot durch das roamende Endgerät,
- von dem roamenden Endgerät zu dem Ursprungsstandort eine Nachricht über die Annahme des Zugangsangebots zu den Informationen bei der Ausstrahlung an die zweite globale Multicast-Informationsausstrahlungsadresse zu übertragen; und nach dem Empfang der Nachricht über die Annahme des Zugangsangebots durch den Ursprungsstandort,
- die auszustrahlenden Informationen von der ersten zur zweiten Ausstrahlungsadresse weiterzuleiten; und
- durch globale Multicast-Ausstrahlung die unter der zweiten Adresse auszustrahlenden Informationen zu übertragen, wodurch es dem roamenden Endgerät, das an einen Standort angeschlossen ist, der nicht dem Ursprungsstandort bzw. der Ursprungsorganisation angehört, an dem Standort die Informationen bei der Ausstrahlung unter der ersten Adresse bei lokaler Ausstrahlung zu empfangen, die unter der zweiten globalen Ausstrahlungsadresse ausgestrahlt werden.

5. Multicast-Ausstrahlungssystem zu einem roamenden Endgerät ($T_x$) in Abhängigkeit von der Lokalisierung des IP-Netzanschlusses dieses letztgenannten nach einem laufenden Anschluss dieses roamenden Endgeräts an einen Standort ($S_x$), der dem Standort oder der Ursprungsorganisation ($O_o$), mit dem dieses roamende Endgerät verbunden ist, angehört oder nicht, und nach der Übertragung einer Nachricht von diesem roamenden Endgerät zu diesem Ursprungsstandort ($S_1$) , **dadurch gekennzeichnet, dass** dieses System mindestens umfasst:

▪ hinsichtlich des Ursprungsstandortes,

- Mittel, um die Lokalisierung dieses roamenden Endgeräts gegenüber seinem Ursprungsstandort bzw. seiner Ursprungsorganisation auf Basis der Nachricht zu diskriminieren, und
- Mittel, um an dieses roamende Endgerät eine Information über die Diskriminierung der Lokalisierung zu übertragen; und

▪ hinsichtlich dieses roamenden Endgeräts für jede Zugangsanfrage dieses roamenden Endgeräts zu einer Multicast-Gruppenausstrahlung, die für den Ursprungsstandort bestimmt ist und sich auf eine lokale Multicast-Ausstrahlung am Standort bzw. an der Ursprungsorganisation des roamenden Endgeräts bezieht,

- Mittel, um diese Zugangsanfrage, wenn die Information über die Diskriminierung einer Lokalisierung einen Anschluss dieses roamenden Endgeräts außerhalb seines Ursprungsstandorts bzw. seiner Ursprungsorganisation bezeichnet, durch einen Zugangsantrag zu einer erweiterten Multicast-Ausstrahlung, die den Zugang zu der lokalen Multicast-Ausstrahlung ermöglicht, zu ersetzen, und
- Mittel, um zu dem Ursprungsstandort diesen Zugangsantrag zu dieser erweiterten Multicast-Ausstrahlung zu übertragen.

6. System nach Anspruch 5, **dadurch gekennzeichnet, dass** die Diskriminierungsmittel mindestens gebildet sind von:

- Datenbasismitteln, umfassend mindestens eine erste Gesamtheit von permanenten internen Adressen, die von diesem Ursprungsheimatnetz der Gesamtheit der mit diesem Ursprungsheimatnetz verbundenen roamenden Endgeräte zugewiesen sind, und eine zweite Gesamtheit von temporären internen Adressen, die geeignet sind, dieser Gesamtheit von roamenden Endgeräten für jeden Anschluss an einem anderen Standort, der dieser Ursprungsorganisation angehört, zugewiesen zu werden;
- zur Identifikation Vergleichsmittel der Lokalisierungsreferenz mit den Adressenwerten mindestens einer der ersten und zweiten Gesamtheit von permanenten bzw. temporären internen Adressen; und
- Mittel zur Übertragung von dem Ursprungsheimatnetz zu dem roamenden Endgerät einer Quittierungsnachricht, die mindestens eine Information über die Diskriminierung einer Lokalisierung enthält, die entweder den Anschluss dieses roamenden Endgeräts an sein Ursprungsheimatnetz bei Identifikation dieser Lokalisierungsreferenz in dieser ersten Gesamtheit der permanenten internen Adressen, oder den Anschluss dieses roamenden Endgeräts an das Netz an einem anderen Standort, der dieser Ursprungsorganisation mit mehreren Standorten angehört, bei Identifikation dieser Lokalisierungsreferenz in der zweiten Gesamtheit der temporären internen Adressen oder auch den Anschluss dieses roamenden Endgeräts an das Netz an einem beliebigen Standort, der nicht dieser Ursprungsorganisation mit mehreren Standorten angehört, bei Fehlen einer Identifikation dieser Lokalisierungsreferenz in der einen oder der anderen der ersten und zweiten Gesamtheiten der permanenten bzw. temporären internen Adressen bezeichnet.

7. System nach Anspruch 5 oder 6, **dadurch gekennzeichnet, dass** die Mittel für den Ersatz dieser Zugangsanfrage mindestens umfassen:

▪ Mittel zur Diskriminierung der Klasse der angeforderten Multicast-Ausstrahlungsadresse gegenüber den globalen bzw. lokalen Multicast-Ausstrahlungsklassen am Ursprungsstandort bzw. bei der Ursprungsorganisation, und
▪ Mittel zur Diskriminierung des Werts der Information über die Diskriminierung einer Lokalisierung dieses roamenden Endgeräts.

8. System nach einem der Ansprüche 5 bis 7, **dadurch gekennzeichnet, dass** die Mittel zur Diskriminierung der Lokalisierung dieses Endgeräts von einer Software gebildet sind, die am Ursprungsstandort des roamenden Endgeräts eingerichtet ist.

9. System nach einem der Ansprüche 5 bis 8, **dadurch gekennzeichnet, dass** die Ersatzmittel von einer Software gebildet sind, die auf diesem roamenden Endgerät eingerichtet ist und von diesem ausgeführt werden kann.

10. Softwareprodukt, das auf einem Speicherträger zur Ausführung durch einen Computer aufgezeichnet ist, **dadurch gekennzeichnet, dass** das Softwareprodukt für den Einsatz aller Schritte des Verfahrens nach einem der Ansprüche 1 bis 4 und des Systems nach den vorhergehenden Ansprüche 5 bis 9 ausgeführt ist, wobei es das Softwareprodukt, wenn es von einem Computer ausgeführt wird, der am Ursprungsstandort dieses roamenden Endgeräts eingerichtet ist, ermöglicht, die Lokalisierung dieses roamenden Endgeräts gegenüber seinem Ursprungsstandort bzw. seiner Ursprungsorganisation auf Basis einer Nachricht zu diskriminieren.

11. Softwareprodukt, das auf einem Speicherträger zur Ausführung durch einen Computer aufgezeichnet ist, **dadurch gekennzeichnet, dass** das Softwareprodukt für den Einsatz aller Schritte des Verfahrens nach einem der Ansprüche 1 bis 4 und des Systems nach den vorhergehenden Ansprüche 5 bis 9 ausgeführt ist, wobei es das Softwareprodukt, wenn es von einem roamenden Computer ausgeführt wird, der am außerhalb seines Ursprungsstandorts bzw. seiner Ursprungsorganisation angeschlossen ist, ermöglicht, die jede Zugangsanfrage dieses roamenden Endgeräts zu einer lokalen Multicast-Ausstrahlung am Ursprungsstandort bzw. bei der Ursprungsorganisation dieses roamenden Endgeräts durch einen Zugangsantrag zu einer erweiterten Multicast-Ausstrahlung, die den Zugang zu dieser lokalen Multicast-Ausstrahlung ermöglicht, zu ersetzen.

12. Roamendes Endgerät, umfassend Kommunikationsmittel, die geeignet sind, einen Anschluss an einem Ursprungsstandort, mit dem dieses roamende Endgerät verbunden ist, einzurichten, **dadurch gekennzeichnet, dass** es ferner Synchronisierungsmittel, die geeignet sind, eine Synchronisierungsnachricht zum Ursprungsstandort zu übertragen, und Mittel für den Empfang einer Information über die Diskriminierung einer Lokalisierung, die vom Ursprungsstandort zurück gesandt wird, umfasst, wobei die Empfangsmittel an Zugangsmittel zu einer lokalen Multicast-Gruppenausstrahlung am Ursprungsstandort angeschlossen sind, die dazu vorgesehen sind, einen Zugangsantrag zu einer lokalen Multicast-Ausstrahlung in einen Zugangsantrag zu einer erweiterten Multicast-Ausstrahlung umzuformen, die den Zugang zu der lokalen Multicast-Ausstrahlung ermöglicht, wenn die Information über die Diskriminierung einer Lokalisierung einen Anschluss des roamenden Endgeräts außerhalb des Ursprungsstandorts bezeichnet.

**Claims**

1. Method of multicast broadcasting to a roaming terminal ($T_x$) according to the location of the IP network connection of the latter, **characterized in that**, following a routine connection of this roaming terminal to a site ($S_x$) affiliated or not affiliated to the original site and/or to the original organization ($O_o$) to which this roaming terminal is attached and the transmission of a signaling message (RM(LR)) from this roaming terminal to said original site, said method consists at least in:

   ▪ on said original site ($S_1$),

      ▪ discriminating (B) the location of said roaming terminal with respect to its original site, or its original organization, from said signaling message,
      ▪ transmitting to said roaming terminal a location discriminating information item (AR(LI)); and

   ▪ on said roaming terminal, for any request (AD(GR)) from said roaming terminal to access a group multicast broadcast intended for the original site and relating to a multicast broadcast local to the original site, or to the original organization, of said roaming terminal,

      ▪ replacing (F) said access request (AD(GR)), when said location discriminating information item designates a connection of said roaming terminal outside its original site, or its original organization, with a request to access an extended multicast broadcast (AR($GR_2$)) allowing access to said local multicast broadcast;
      ▪ transmitting (I), to said original site, said request to access said extended multicast broadcast.

2. Method according to Claim 1, **characterized in that**, for a roaming terminal likely to operate inside and/or outside its original home network, said roaming terminal being allocated, by said original home site, an internal permanent address for any network connection of this roaming terminal to a site affiliated to this original home network, an internal temporary address for any network connection of this terminal to another site, affiliated to said original multisite organization, and, for any site not affiliated to said original organization, an external temporary address for any network connection of said roaming terminal to said any site, said addresses forming, for said terminal, a location reference (LR), said step consisting in discriminating the location of said roaming terminal with respect to its original site, or its original organization, consists at least in:

   - transmitting from said roaming terminal to said original home network, said signaling message including at least said location reference (LR);

- comparing ($B_1$), for identification, said location reference with the address values of at least one of the sets formed by the set of internal permanent addresses allocated to the set of roaming terminals attached to this original home network and likely to operate in the original home network and by the set of internal temporary addresses allocated to this set of roaming terminals for any connection to another site affiliated to said original organization; and

- transmitting ($B_2$) from the original home site to said roaming terminal a signaling acknowledgement message containing at least said location discriminating information item of the roaming terminal designating either the connection of said roaming terminal to its original home network on identification of said location reference in the set of internal temporary addresses, or the network connection of said roaming terminal to another site affiliated to said original organization on identification of said location reference in the set of internal temporary addresses, or even the network connection of said roaming terminal to any site not affiliated to said original organization, in the absence of identification of said location reference in either the set of internal permanent addresses or the set of internal temporary addresses.

3. Method according to either of Claims 1 and 2, **characterized in that** said step consisting in replacing said access request with a request to access an extended multicast broadcast consists at least in:

- ▪ discriminating (D1) the class of the multicast broadcast address requested with respect to the multicast broadcast classes that are global (GA), or local, to the original site, or to the original organization; and

  - on discrimination of a requested multicast broadcast address belonging to the global broadcast address class, transmitting (E) a request to access said requested multicast broadcast address; otherwise
  - on discrimination ($D_2$) of a requested multicast broadcast address belonging to the class of multicast broadcast addresses local to said original organization and/or to the original site, to which said roaming terminal is affiliated, according to said location discriminating information item,

    ➤ if said roaming terminal is connected to a site affiliated to its original organization, and if said requested broadcast address is an address global to the original organization, or,

    ➤ if said roaming terminal is connected to its original home site and if said requested broadcast address is an address local to said original home site,

      o transmitting (E) a request to access said requested multicast broadcast address; otherwise

    ➤ if said roaming terminal is connected to a site separate from its original home site, but if the requested broadcast address is local to said original home site, or

    ➤ if said roaming terminal is connected to a site not affiliated to its original organization, but if said requested broadcast address is a global address local to said original organization,

      o transmitting (H) a request to access an extended multicast broadcast from a local multicast information broadcast, said request to access an extended multicast broadcast being used, from the original home site, to assign and transmit to said roaming terminal another global multicast broadcast address, under which said local multicast broadcast can be accessed on the site to which said terminal is connected; and
      o transmitting (I) from said roaming terminal to said original home site of the latter an access request including said other global multicast broadcast address.

4. Method according to any one of Claims 1 to 3, **characterized in that** the step consisting in transmitting a request to access an extended multicast broadcast from a multicast information broadcast that is local to the original organization, or to the original site, of said roaming terminal, this local multicast information broadcast being generated by an information broadcasting source located at a first local multicast information broadcast address ($LMD_{1i}$) in this original site, consists in:

- transmitting, from said roaming terminal to said original site, an extended multicast information broadcast request message, said request message containing at least said first local multicast information broadcast address ($LMD_{1i}$) and an identification code of said roaming terminal; and, following the identification of said roaming terminal by said original site,
- transmitting, from said original site to said roaming terminal, a message offering access to a global multicast information broadcast, said message offering access comprising at least one second global multicast information broadcast address ($GMD_{1g}$), the broadcasting source of which is identified in said original site; and, following the receipt of said message offering access by said roaming terminal,

- transmitting from the roaming terminal to said original site, a message accepting the offer of access to the information being broadcast at said second global multicast information broadcast address; and, after receipt of the message accepting the offer of access at said original site,

- transferring the information to be broadcast from the first to the second broadcast address; and

- transmitting, by global multicast broadcast, the information to be broadcast under the second address, which enables said roaming terminal interconnected to a site not affiliated to said original site, or to said original organization, to receive, on said site, said information being broadcast under the first local broadcast address, broadcast under the second global broadcast address.

5. System of multicast broadcasting to a roaming terminal ($T_x$) according to the location of the IP network connection of the latter, following a routine connection of this roaming terminal to a site ($S_x$) affiliated or not affiliated to the original site and/or to the original organization ($O_o$) to which this roaming terminal is attached and the transmission of a signaling message from this roaming terminal to this original site ($S_1$), **characterized in that** this system comprises at least:

- on said original site,

- means of discriminating the location of this roaming terminal with respect to its original site, or its original organization, from this signaling message, and
- means of transmitting to this roaming terminal a location discriminating information item; and

- on this roaming terminal, for any request from this roaming terminal to access a group multicast broadcast intended for the original site and relating to a multicast broadcast local to the original site, or to the original organization, of this roaming terminal,

- means of replacing this access request, when this location discriminating information item designates a connection of this roaming terminal outside its original site, or its original organization, with a request to access an extended multicast broadcast allowing access to this local multicast broadcast, and
- means of transmitting to the original site this request to access this extended multicast broadcast.

6. System according to Claim 5, **characterized in that** said discrimination means are formed by at least:

- database means comprising at least a first set of internal permanent addresses allocated, by this original home network, to the set of roaming terminals attached to this original home network, and a second set of internal temporary addresses likely to be allocated to this set of roaming terminals, for any connection to another site affiliated to this original organization;
- means of comparing, for identification purposes, said location reference with the address values of at least one of the first and second sets of internal permanent, or internal temporary, addresses; and
- means of transmitting, from said original home network to the roaming terminal, a signaling acknowledgement message containing at least one location discriminating information item designating either the connection of this roaming terminal to its original home network on identification of this location reference in this first set of internal permanent addresses, or the network connection of this roaming terminal to another site affiliated to this original multisite organization on identification of this location reference in the second set of internal temporary addresses, or even the network connection of this roaming terminal to any site not affiliated to the original multisite organization in the absence of identification of this location reference in either of the first and second sets of internal permanent, or internal temporary, addresses.

7. System according to Claim 5 or 6, **characterized in that** said means of replacing this access request include at least:

- means of discriminating the class of the multicast broadcast address requested with respect to the multicast broadcast classes that are global, or local, to the original site, or to the original organization, and
- means of discriminating the value of the location discriminating information item of this roaming terminal.

8. System according to one of Claims 5 to 7, **characterized in that** said location discriminating means of this terminal are formed by a software agent located on the original site of said roaming terminal.

9. System according to one of Claims 5 to 8, **characterized in that** said replacement means are formed by a software agent located on this roaming terminal and executable by the latter.

10. Software product stored on a storage medium for execution by a computer, **characterized in that** said software product is configured to implement all the steps of the method according to any one of Claims 1 to 4 and the system according to Claims 5 to 9 above, said software product, when executed by a computer located on the original site of this roaming terminal, enabling the location of this roaming terminal to be discriminated with respect to its original site, or its original organization, from a signaling message.

11. Software product stored on a storage medium for execution by a computer, **characterized in that** said software product is configured to implement all the steps of the method according to any one of Claims 1 to 4 and the system according to Claims 5 to 9 above, said software product, when executed by a roaming computer connected outside its original site, or its original organization, being used to replace any request from this roaming terminal to access a multicast broadcast local to the site, or to the original organization, of this roaming terminal, with a request to access an extended multicast broadcast enabling access to this local multicast broadcast.

12. Roaming terminal comprising communication means suitable for setting up a connection with an original site to which this roaming terminal is attached, **characterized in that** it also comprises synchronization means suitable for transmitting a synchronization message to the original site, and means of receiving a location discriminating information item sent in return by the original site, the reception means being connected to means of accessing a group multicast broadcast local to the original site suitable for converting a request to access a local multicast broadcast into a request to access an extended multicast broadcast enabling access to the local multicast broadcast when the location discriminating information item designates a connection of the roaming terminal outside the original site.

**FIG.1a**

*(art antérieur)*

Réseau IP
Multicast

| | |
|---|---|
| ─────── | Tunnel unicast |
| ━━·━·━ | Diffusion Multicast locale |

**FIG.1b**

*(art antérieur)*

**FIG.1c**

*(art antérieur)*

$$T \quad S_1, O_0$$
$$S_x$$

**A** — Transmission RM(LR)
$T_x \longrightarrow S_1$

Connexion
T sur $S_x$
$u$

**B** — Discrimination LI
Transmission AR(LI)
$S_1 \longrightarrow T_x$ — $S_1$

**C** — Demande d'accès
AD(GR);LI

$T_x$
$u$

**D** — GR?

oui
GR=GA

non
GR=Gl$_s$

oui mais GR=Gl$_0$

**F** — LI

**G** — $LI \in O_0 \quad LI \in S_1$
ET      ET
$GR \in Gl_0 \quad GR \in Gl_s$

−

+

**H** — Substitution GR ⟶ GR$_2$
AR(GR) ⟶ AR(GR$_2$)

**E** — Accès AR(GR)

**I** — Accès AR(GR$_2$)

## FIG.2a

$C$ — AD(GR) ← $u$

$D_1$ : GR=GA

$D_2$ : GR=Gl$_0$

$C$

LI

GR=Gl$_s$
LI

$G_1$ : LI∈O$_0$

$G_2$ : LI∈S$_1$

Substitution GR → GR$_2$
AR(GR) → AR(GR$_2$) — $H$

$E$ — Accès AR(GR)

Accès AR(GR$_2$) — $I$

**FIG.2b**

$$\left. O_0 \middle\{ \begin{array}{c} \{P@_{1i}\}_{i=1}^{i=I} \\ \{P@_{1si}\}_{i=1}^{i=I}, S=[1,H] \\ \{P@_{2j}\}_{j=1}^{j=J} \\ \{P@_{3k}\}_{k=1}^{k=K} \\ \{P@_{4l}\}_{l=1}^{l=L} \end{array} \right| \left. O_p \middle\{ \begin{array}{c} \{P@_{pm}\}_{m=1}^{m=M} \\ \{P@_{6n}\}_{n=1}^{n=N} \end{array} \right. \\ \qquad\qquad\qquad LR = P@_{xy} $$

$$\boxed{\begin{array}{c} Transmission : T_x \longrightarrow S_1 \\ RM(LR) \end{array}} \quad \sim A$$

$$\boxed{\begin{array}{l} Comparaison \\ LR \in [\ \{P@_{1i}\}_{i=1}^{i=I} ; \{P@_{2j}\}_{j=1}^{j=J} ; \{P@_{3k}\}_{k=1}^{k=K} ; \{P@_{4l}\}_{l=1}^{l=L}\ ] \end{array}} \quad \sim B_1$$

$$\boxed{\begin{array}{l} Transmission : S_1 \longrightarrow T_x \\ \\ AR(LI) \begin{cases} LI=0 \quad si \quad LR \in S_1 \\ LI=1 \quad si \quad LR \in (S_2 ; S_3) \\ LI=2 \quad si \quad LR \notin (S_1, S_2, S_3) \end{cases} \end{array}} \quad \sim B_2$$

$B$

# FIG.3a

$$B_{10}$$

$$LR = P@_{xy}$$

$$B_{12}$$

$$LI = 0$$
$$T_x \text{ connecté à } S_1 \in O_0$$

$$B_{11}$$

$$LR \in \{P@_{1i}\}_{i=1}^{i=I} ?$$

$$+$$

$$-$$

$$B_{13}$$

$$B_{14}$$

$$LI = 1$$
$$T_x \text{ connecté à } S_x \in O_0$$

$$+$$

$$LR \in [\{P@_{2j}\}_{j=1}^{j=J} ; \{P@_{3k}\}_{k=1}^{k=K} ; \{P@_{4l}\}_{l=1}^{l=L} ]$$

$$-$$

$$B_{15}$$

$$LI = 2$$
$$T_x \text{ connecté à } S_q \notin O_0$$

*FIG.3b*

$$S_1 \{S_k\}_{k=2}^{k=N}$$
$$GR = LMD_{1i} \ T_{1jk}$$

$T_{1jk}$ | Transmission $T_{1jk} \rightarrow S_1$ de EMR($LMD_{1i}$) | $H_1$

$S_1$ | Transmission $S_1 \rightarrow T_{1jk}$ de GMO($GMD_{1g}$) | $H_2$

$N_{1jk}$ | Transmission $T_{1jk} \rightarrow S_1$ de AAO($GMD_{1g}$) | $H_3$

Transmission point à point

$S_1$ { Transfert $ID_{1i} \rightarrow ID_{1g}$ | $H_4$

Transmission Multicast globale $ID_{1g}$ | $H_5$

Transmission point. - multipoint

## _FIG.4a_

$$SD, \ R_{11}$$

Diffusion locale $SD \rightarrow R_{11}$ $ID_{1i}$($LMD_{1i}$) | $H_{41}$

Redirection $GR, ID_{1i} \rightarrow ID_{1g}, GR_2$ | $H_{42}$

## _FIG.4b_

$\{P@_{1i}\}_{i=1}^{i=I}$

$\{P@_{1si}\}_{i=1}^{i=I}, s=[1,H]$

$R_{11}$

$R_{13}$  $R_{12}$

$S$

$HA$

$T_1\ TA$
$LI=0$

$O_0$

$S_1$

$R_2$

$T_2\ TA$
$LI=1$

$\{P@_{2j}\}_{j=1}^{j=J}$

$S_2$

$T_3\ TA$
$LI=1$

$S_3$  $R_3$

$\{P@_{3k}\}_{k=1}^{k=K}$

$\{P@_{41}\}_{l=1}^{l=L}$

- - -> Diffusion Multicast locale

——≫ Diffusion Multicast (étendue) globale

INTERNET

$S_p$

$O_p$

$\{P@_{pm}\}_{m=1}^{m=M}$

$T_p,\ TA$
$LI=2$

$\{P@_{6n}\}_{n=1}^{n=N}$

**FIG.5**

**RÉFÉRENCES CITÉES DANS LA DESCRIPTION**

**Documents brevets cités dans la description**

- WO 0051373 A
- FR 0309873
- FR 0312688